# EUROPEAN PATENT APPLICATION

(11) **EP 4 317 102 A1**
(43) Date of publication of application: **07.02.2024**
(21) Application number: 22781182.5
(22) Date of filing: 30.03.2022
(51) Int. Cl.: C04B 22/02, B28C 7/04, C01B 32/225, C04B 24/04, C04B 24/06, C04B 24/12, C04B 24/16, C04B 28/02

(54) **ADDITIVE FOR HYDRAULIC COMPOSITIONS, AND HYDRAULIC COMPOSITION USING SAME**

(30) Priority: 31.03.2021 JP 2021061536
(71) Applicant: Osaka Gas Co., Ltd., Osaka-shi, Osaka 541-0046 (JP)
(72) Inventor: NIIMURA, Tomonari, Osaka-shi, Osaka 541-0046 (JP); SAKAMOTO, Hiroki, Osaka-shi, Osaka 541-0046 (JP); URANO, Shota, Osaka-shi, Osaka 541-0046 (JP)
(74) Representative: Müller-Boré & Partner Patentanwälte PartG mbB
(86) International application number: PCT/JP2022/016290
(87) International publication number: WO 2022/210972

(57) **Abstract**

An additive for a hydraulic composition, comprising flaky carbon and an organic compound containing a hydrophilic group and a hydrophobic group with a high affinity for carbon is capable of efficiently improving the strength of a hydraulic composition.

## Description

### Technical Field

The present invention relates to an additive for a hydraulic composition and to a hydraulic composition containing the additive.

### Background Art

Graphene sheets are made of carbon atoms bonded together hexagonally like a mesh to form a sheet-like structure. Graphene sheets formed of only one layer are extremely thin and light, with a thickness of about 1 nm, and have the advantages of high strength and high thermal conductivity.

As disclosed in Non-patent Literature (NPL) 1, it is known that the strength of concrete is approximately doubled by adding several hundred grams of graphene sheets to 1 m³ of the concrete.

### Citation List

### Non-patent Literature

NPL 1: Advanced Functional Materials, 2018, 28, 1705183
NPL 2: K. R. Paton, E. Varrla, C. Backes, R. J. Smith, U. Khan, A. O'Neill, C. Boland, M. Lotya, O. M. Istrate, P. King, T. Higgins, S. Barwich, P. May, P. Puczkarski, I. Ahmed, M. Moebius, H. Pettersson, E. Long, J. Coelho, S. E. O'Brien, E. K. McGuire, B. M. Sanchez, G. S. Duesberg, N. McEvoy, T. J. Pennycook, C. Downing, A. Crossley, V. Nicolosi, J. N. Coleman, Nat. Mater. 2014, 13, 624
NPL 3: Paton, Keith R. et al. "Scale-up of Liquid Exfoliation of Graphene"

### Summary of Invention

### Technical Problem

However, the method of NPL 1 has extremely low production efficiency and is not suitable for efficiently and inexpensively producing large amounts of graphene.

NPL 1 cites NPL 2, which describes the original production method, and discloses that progress was made in the production method. In NPL 2, graphene is obtained by adding 50 mg/ml (5 mass%) of graphite, mixing with a mixer for a long period of time, and centrifuging. However, only at most 1 to 10 ug/ml (0.0001 to 0.001%) of graphene can be obtained per 20 minutes even with optimization. The absolute amount obtained and the yield (about 0.01%) from graphite are insufficient. In addition, the step of performing centrifugation and collecting the supernatant is difficult to scale up. In fact, in NPL 3, 300-L scale production is attempted, but the amount produced per hour is 5 g = 0.0016 mass%.

Thus, an object of the present invention is to provide an additive capable of efficiently improving the strength of a hydraulic composition.

### Solution to Problem

The present inventors conducted extensive research to achieve the above object, and found that the strength of a hydraulic composition can be efficiently improved by containing flaky carbon and an organic compound containing a hydrophilic group and a hydrophobic group with a high affinity for carbon. The inventors have accomplished the present invention as a result of further research based on this finding. Specifically, the present invention includes the following features.

### Item 1.

An additive for a hydraulic composition, comprising flaky carbon and an organic compound containing a hydrophilic group and a hydrophobic group with a high affinity for carbon.

### Item 2.

The additive for a hydraulic composition according to Item 1, further comprising water.

### Item 3.

The additive for a hydraulic composition according to Item 1 or 2, wherein the hydrophilic group comprises at least one member selected from the group consisting of groups represented by formulas (1) to (6): 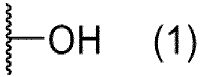 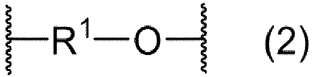 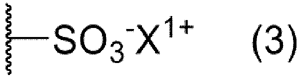 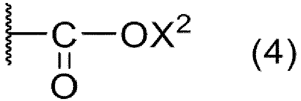 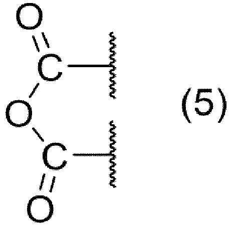 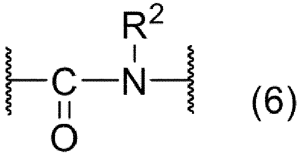 wherein -OH in formula (1) represents a hydroxyl group; the oxygen atom in formula (2) represents an ether bond; formula (5) represents an acid anhydride group; R¹ represents a divalent organic group; R² represents a hydrogen atom or an alkyl group; X¹ represents a hydrogen atom, an alkali metal, NH₄, or organic ammonium; and X² represents a hydrogen atom, an alkali metal, NH₄, organic ammonium, or an alkyl group.

### Item 4.

The additive for a hydraulic composition according to any one of Items 1 to 3, wherein the hydrophilic group comprises at least one member selected from the group consisting of an alcoholic hydroxyl group, -SO₃Na, -COONa, -COOCH₃, and a polyoxyethylene group.

### Item 5.

The additive for a hydraulic composition according to any one of Items 1 to 4, wherein the hydrophobic group comprises at least one member selected from the group consisting of an alkyl group, an alkenyl group, a cycloalkyl group, an aryl group, and a polyoxyalkylene group having 3 or more carbon atoms.

### Item 6.

The additive for a hydraulic composition according to any one of Items 1 to 5, wherein the hydrophobic group comprises an aryl group having at least one oxygen atom attached thereto and/or an aryl group having two or more aromatic rings.

### Item 7.

The additive for a hydraulic composition according to any one of Items 1 to 6, wherein the organic compound containing a hydrophilic group and a hydrophobic group with a high affinity for carbon is at least one chemical admixture for concrete selected from the group consisting of air-entraining admixtures, water-reducing admixtures, hardening accelerators, air-entraining and water-reducing admixtures, high-range water-reducing admixtures, air-entraining and high-range water-reducing admixtures, and superplasticizers.

### Item 8.

The additive for a hydraulic composition according to any one of Items 1 to 7, wherein the flaky carbon has a carbon content of 95.0 mass% or more.

### Item 9.

The additive for a hydraulic composition according to any one of Items 1 to 8, wherein the flaky carbon has a size of 0.1 to 30.0 µm.

### Item 10.

The additive for a hydraulic composition according to any one of Items 1 to 9, wherein the flaky carbon has a thickness of 0.335 to 100 nm.

### Item 11.

The additive for a hydraulic composition according to any one of Items 1 to 10, wherein the additive for a hydraulic composition comprises the organic compound containing a hydrophilic group and a hydrophobic group with a high affinity for carbon in an amount of 1 to 1000 parts by mass per 100 parts by mass of the flaky carbon.

### Item 12.

A method for producing the additive for a hydraulic composition of any one of Items 1 to 11, comprising subjecting at least one carbonaceous material dispersion that contains a carbonaceous material having a layered structure, a water-soluble compound containing a hydrophobic group with a high affinity for carbon and a hydrophilic group, and a solvent to pressure treatment at 30 MPa or more,
wherein at least one treatment selected from the group consisting of the following (i) to (iii) is performed by the pressure treatment:
   (i) two or more carbonaceous material dispersions that are the at least one carbonaceous material dispersion are collided with each other;
   (ii) the carbonaceous material dispersion is collided with a metal or a ceramic material; and
   (iii) the carbonaceous material dispersion is passed through a space with a cross-sectional area of 1 cm² or less,
the solvent comprises water, and
the content of the water is 70 mass% or more of the solvent.

### Item 13.

A method for producing the additive for a hydraulic composition of any one of Items 1 to 11, comprising:
placing a composition that contains a carbonaceous material having a layered structure, a water-soluble compound containing a hydrophobic group with a high affinity for carbon and a hydrophilic group, and a solvent between a rotary plate configured to rotate and a plate disposed substantially parallel to the rotary plate; and
applying shear to the carbonaceous material in the composition while adjusting the shortest distance between the rotary plate and the plate to 200 µm or less,
wherein the solvent comprises water, and
the content of the water is 70 mass% or more of the solvent.

### Item 14.

The production method according to Item 12 or 13, wherein part or all of the solvent is removed after the pressure treatment or the shear treatment.

### Item 15.

A hydraulic composition comprising the additive for a hydraulic composition of any one of Items 1 to 11 and a hydraulic component.

### Item 16.

The hydraulic composition according to Item 15, wherein the content of the additive for a hydraulic composition is 0.01 to 10 parts by mass per 100 parts by mass of the hydraulic component.

### Item 17.

The hydraulic composition according to Item 15 or 16, which is a cement hydration product.

### Item 18.

A method for producing the hydraulic composition of any one of Items 15 to 17, comprising mixing a hydraulic powder material and the additive for a hydraulic composition.

### Item 19.

The production method according to Item 18, wherein in the mixing step, a chemical admixture for concrete is further mixed.

### Advantageous Effects of Invention

The present invention provides an additive capable of efficiently improving the strength of a hydraulic composition. In the present invention, the strength of a hydraulic composition can be improved by a method that has a production efficiency that is about 10000 times the production efficiency of NPL 1 (100% of the total amount used, compared with a yield of 0.01%) when the concentration of graphite added is 5 mass% and can be easily scaled up with no loss of graphite.

### Brief Description of Drawings

Fig. 1 is a diagram illustrating the configuration of an additive for a hydraulic composition of the present invention in which the content of an organic compound containing a hydrophilic group and a hydrophobic group with a high affinity for carbon is small (in which the surface of flaky carbon is covered with the organic compound containing a hydrophilic group and a hydrophobic group with a high affinity for carbon).
Fig. 2 is a diagram illustrating the configuration of an additive for a hydraulic composition of the present invention in which the content of an organic compound containing a hydrophilic group and a hydrophobic group with a high affinity for carbon is large (in which flaky carbon is dispersed in the organic compound containing a hydrophilic group and a hydrophobic group with a high affinity for carbon).
Fig. 3 is graphs of compressive strength and static modulus of elasticity of concrete, showing the results of Test Example 6.
Fig. 4 is a graph of compressive strength of mortar, showing the results of Test Example 9.
Fig. 5 is a graph of compressive strength of mortar, showing the results of Test Example 11.
Fig. 6 is a graph of compressive strength of mortar, showing the results of Test Example 13.
Fig. 7 is a graph of compressive strength of concrete, showing the results of Test Example 15.
Fig. 8 is a graph of flexural strength of concrete, showing the results of Test Example 16.

### Description of Embodiments

In the present specification, the terms "comprise," "contain," and "include" encompass the concepts of comprising, consisting essentially of, and consisting of.

In the present specification, a numerical range indicated by "A to B" means A or more and B or less.

### 1. Additive for Hydraulic Composition

The additive for a hydraulic composition of the present invention comprises flaky carbon and an organic compound containing a hydrophilic group and a hydrophobic group with a high affinity for carbon.

### (1-1) Flaky Carbon

The flaky carbon functions as a strength improver.

The flaky carbon preferably has a high carbon content from the viewpoint of the properties of improving the strength of a hydraulic composition. From this viewpoint, the carbon content of the flaky carbon is preferably 95.0 mass% or more, more preferably 97.0 mass% or more, even more preferably 97.5 mass% or more, and particularly preferably 98.0 mass% or more, based on the total amount of the flaky carbon taken as 100 mass%. The upper limit of the carbon content of the flaky carbon is not particularly limited, and is generally 100 mass%.

The flaky carbon is preferably thinner because excellent properties of improving the strength of a hydraulic composition are obtained. The thickness of the flaky carbon is preferably 0.335 to 100 nm, more preferably 0.670 to 50 nm, and even more preferably 1 to 20 nm. The content of flaky carbon having a thickness of 0.335 to 20 nm is preferably 50% or more, more preferably 70% or more, and even more preferably 80% or more, based on the total number of pieces of flaky carbon taken as 100%. That is, flaky carbon having a large thickness may be contained; however, the thickness of many pieces of flaky carbon is preferably 20 nm or less. The thickness of the flaky carbon is measured by transmission electron microscope (TEM) observation.

The flaky carbon is preferably thinner because excellent properties of improving the strength of a hydraulic composition are obtained. The flaky carbon preferably has a layered structure in which 300 layers or less (i.e., 1 to 300 layers) of graphene are laminated, more preferably a layered structure in which 2 to 150 layers of graphene are laminated, and even more preferably a layered structure in which 3 to 60 layers of graphene are laminated. The content of flaky carbon in which the number of layers laminated is 1 to 60 is preferably 50% or more, more preferably 70% or more, and even more preferably 80% or more, based on the total number of pieces of flaky carbon taken as 100%. That is, flaky carbon having a large thickness may be contained; however, the thickness of many pieces of flaky carbon is preferably 60 layers or less. The number of layers laminated in the flaky carbon is calculated according to the thickness measured by transmission electron microscope (TEM) observation.

Flaky carbon generally has a planar shape with many convex and concave angles; thus, it is difficult to unconditionally specify a size other than thickness. In the present specification, the distance between the convex angles that are furthest apart in one piece of flaky carbon is defined as the size of the flaky carbon.

The size of the flaky carbon is preferably 0.1 to 30.0 µm, more preferably 0.3 to 20.0 µm, and even more preferably 0.5 to 15.0 µm. The use of flaky carbon having such a size makes it easy to further enhance the properties of improving the strength of a hydraulic composition. The size of the flaky carbon is measured by transmission electron microscope (TEM) observation.

The content of the flaky carbon in the additive for a hydraulic composition of the present invention is not particularly limited, and is preferably 1 to 50 mass%, more preferably 2 to 40 mass%, and even more preferably 2.5 to 30 mass%, based on the total amount of the additive for a hydraulic composition of the present invention taken as 100 mass%, from the viewpoint of the properties of improving the strength of a hydraulic composition.

### (1-2) Organic Compound Containing Hydrophilic Group and Hydrophobic Group with High Affinity for Carbon

In the present invention, the use of the organic compound containing a hydrophilic group and a hydrophobic group with a high affinity for carbon makes it possible to maintain flaky carbon that maintains a graphene structure in a state in which the flaky carbon in the additive for a hydraulic composition of the present invention is uniformly dispersed without aggregation of the flaky carbon, thus enhancing the properties of improving the strength of a hydraulic composition. The organic compound containing a hydrophilic group and a hydrophobic group with a high affinity for carbon can also function as a dispersant for uniformly dispersing flaky carbon.

The organic compound containing a hydrophilic group and a hydrophobic group with a high affinity for carbon is not particularly limited, and various organic compounds (in particular, water-soluble compounds) that can function as dispersants for flaky carbon can be used.

Preferred examples of the hydrophobic group of the organic compound containing a hydrophilic group and a hydrophobic group with a high affinity for carbon include, but are not limited to, an alkyl group, an alkenyl group, a cycloalkyl group, an aryl group, a polyoxyalkylene group having 3 or more carbon atoms, and the like. The organic compound containing a hydrophilic group and a hydrophobic group with a high affinity for carbon may contain one or more of these hydrophobic groups. When a plurality of hydrophobic groups are used, they may be the same hydrophobic groups or different hydrophobic groups.

The alkyl group may be a linear alkyl group or a branched alkyl group, and is preferably a linear alkyl group from the viewpoint of the affinity for carbon. The number of carbon atoms in the alkyl group is preferably 2 or more, more preferably 3 to 22, and even more preferably 4 to 18, from the viewpoint of the affinity for carbon. Examples of such alkyl groups include an n-butyl group, an n-pentyl group, an n-hexyl group, an n-octyl group, an n-decyl group, an n-undecyl group, an n-dodecyl group (or an n-lauryl group), an n-tridecyl group, an n-tetradecyl group (or an n-myristyl group), an n-pentadecyl group, an n-hexadecyl group (or an n-cetyl group), an n-octadecyl group, and the like.

The alkyl group may or may not have one or more substituents. Examples of substituents include a cycloalkyl group, an aryl group, an aralkyl group, and the like. Examples of cycloalkyl and aryl groups include those described below.

The aralkyl group as a substituent in the alkyl group is preferably a C₇₋₁₄ aralkyl group having an aryl group described below and a C₁₋₆ alkyl group. Specific preferred examples include a benzyl group, a phenethyl group, and the like.

The substituents are not limited only to the above and may also include a group derived from a fluorene structure (e.g., fluorenyl group). In particular, when importance is placed on water solubility, a phenyl group and the like are preferred as substituents. When importance is placed on, for example, compatibility with the flaky carbon and the properties of improving the strength of a hydraulic composition, a naphthyl group, a fluorenyl group, and the like are preferred as substituents.

The number of carbon atoms in the alkenyl group is preferably 2 or more, more preferably 3 to 100, and even more preferably 4 to 30, from the viewpoint of the affinity for carbon and water solubility. Examples of such alkenyl groups include a butenyl group, a hexenyl group, an octenyl group, a decenyl group, a dodecenyl group, an oleyl group, a linoleyl group, and the like.

The alkenyl group may or may not have one or more substituents. Examples of substituents include an alkyl group, a cycloalkyl group, an aryl group, an aralkyl group, and the like. Examples of aralkyl groups include those listed above. Examples of cycloalkyl and aryl groups include those described below.

The alkyl group as a substituent in the alkenyl group is preferably a C₁₋₆ alkyl group. Specific preferred examples include a methyl group, an ethyl group, an n-propyl group, an isopropyl group, an n-butyl group, an isobutyl group, a sec-butyl group, a tert-butyl group, and the like.

The substituents are not limited only to the above and may also include a group derived from a fluorene structure (e.g., fluorenyl group). In particular, when importance is placed on water solubility, a phenyl group and the like are preferred as substituents. When importance is placed on, for example, compatibility with the flaky carbon and the properties of improving the strength of a hydraulic composition, a naphthyl group, a fluorenyl group, and the like are preferred as substituents.

The cycloalkyl group is preferably a C₅₋₁₀ (preferably C₅₋₈, particularly C₅₋₆) cycloalkyl group. Specific preferred examples include a cyclopentyl group, a cyclohexyl group, and the like.

The cycloalkyl group may or may not have one or more substituents. Examples of substituents include an alkyl group, an aryl group, an aralkyl group, and the like.

The alkyl group as a substituent in the cycloalkyl group is preferably a C₁₋₆ alkyl group. Specific preferred examples include a methyl group, an ethyl group, an n-propyl group, an isopropyl group, an n-butyl group, an isobutyl group, a sec-butyl group, a tert-butyl group, and the like.

Examples of aryl and aralkyl groups as substituents in the cycloalkyl group include those listed above or below.

The substituents are not limited only to the above and may also include a group derived from a fluorene structure (e.g., a fluorenyl group). In particular, when importance is placed on water solubility, a phenyl group and the like are preferred as substituents. When importance is placed on, for example, compatibility with the flaky carbon and the properties of improving the strength of a hydraulic composition, a naphthyl group, a fluorenyl group, and the like are preferred as substituents.

The aryl group is preferably a C₆₋₂₂ (particularly C₆₋₁₈) aryl group, and may be a monocyclic aryl group, a fused-ring aryl group, or a polycyclic aryl group. Examples include a phenyl group, a naphthyl group, an anthracenyl group, a tetracenyl group, a phenanthrenyl group, a biphenyl group, a terphenyl group, a fluorenyl group, an acenaphthenyl group, an acenaphthylenyl group, a pyrenyl group, a chrysenyl group, a triphenylenyl group, and the like.

The aryl group may or may not have one or more substituents. Examples of substituents include a phenolic hydroxyl group, an alkyl group, a hydroxyalkyl group, a formylalkyl group, a cycloalkyl group, an aralkyl group, an alkoxy group, and the like.

The alkyl group as a substituent in the aryl group is preferably a C₁₋₆ alkyl group. Specific preferred examples include a methyl group, an ethyl group, an n-propyl group, an isopropyl group, an n-butyl group, an isobutyl group, a sec-butyl group, a tert-butyl group, and the like.

The hydroxyalkyl group as a substituent in the aryl group is preferably a C₁₋₆ hydroxyalkyl group. Specific preferred examples include a hydroxymethyl group (-CH₂OH), a 2-hydroxyethyl group (-CH₂CH₂OH), a 2-hydroxypropyl group (-CH₂CHOHCH₃), a 3-hydroxypropyl group (-CH₂CH₂CH₂OH), and the like.

The formylalkyl group as a substituent in the aryl group is preferably a C₁₋₆ formylalkyl group. Specific preferred examples include a formylmethyl group (-CH₂CHO), a 2-formylethyl group (-CH₂CH₂CHO), a 3-formylpropyl group (-CH₂CH₂CH₂CHO), and the like.

Examples of cycloalkyl and aralkyl groups as substituents in the aryl group include those listed above.

The alkoxy group as a substituent in the aryl group is preferably a C₁₋₆ alkoxy group. Specific preferred examples include a methoxy group, an ethoxy group, an n-propyloxy group, an isopropyloxy group, an n-butyloxy group, an isobutyloxy group, a sec-butyloxy group, a tert-butyloxy group, and the like.

The substituents are not limited only to the above and may also include a group derived from a fluorene structure (e.g., a fluorenyl group).

The aryl group is preferably an aryl group having at least one oxygen atom attached thereto (e.g., an aryl group having a phenolic hydroxyl group attached thereto), an aryl group having two or more aromatic rings (a fused-ring aryl group or a polycyclic aryl group), or the like, from the viewpoint of, for example, the affinity for carbon and the properties of improving the strength of a hydraulic composition.

Polyoxyethylene groups are generally hydrophilic; however, polyoxyalkylene groups having 3 or more carbon atoms, such as a polyoxypropylene group and a polyoxybutylene group, become more hydrophobic as the degree of polymerization increases and function as hydrophobic groups. In particular, a polyoxypropylene group with a degree of polymerization of 4 or more and a polyoxybutylene group with a degree of polymerization of 3 or more are preferred. However, from the viewpoint of solubility in a hydraulic composition and fluidity after addition to a hydraulic composition, the degree of polymerization of the polyoxyalkylene group moiety having 3 or more carbon atoms is preferably 10000 or less. For example, when polyoxyethylene-polyoxypropylene or polyoxyethylene-polyoxybutylene is used as the organic compound containing a hydrophilic group and a hydrophobic group with a high affinity for carbon, the polyoxypropylene group and the polyoxybutylene group can also function as hydrophobic groups.

The polyoxyalkylene group having 3 or more carbon atoms may or may not have one or more substituents. Examples of substituents include an alkyl group, a cycloalkyl group, an aralkyl group, an aryl group, and the like.

The alkyl group as a substituent in the polyoxyalkylene group having 3 or more carbon atoms is preferably a C₁₋₆ alkyl group. Specific preferred examples include a methyl group, an ethyl group, an n-propyl group, an isopropyl group, an n-butyl group, an isobutyl group, a sec-butyl group, a tert-butyl group, and the like.

Examples of cycloalkyl, aralkyl, and aryl groups as substituents in the polyoxyalkylene group having 3 or more carbon atoms include those listed above.

The substituents are not limited only to the above and may also include a group derived from a fluorene structure (e.g., fluorenyl group). In particular, when importance is placed on water solubility, a phenyl group and the like are preferred as substituents. When importance is placed on, for example, compatibility with the flaky carbon and the properties of improving the strength of a hydraulic composition, a naphthyl group, a fluorenyl group, and the like are preferred as substituents.

As such hydrophobic groups, an aryl group and a polyoxyalkylene group having 3 or more carbon atoms are preferred, an aryl group is more preferred, and an aryl group having at least one oxygen atom attached thereto (e.g., an aryl group having a phenolic hydroxyl group attached thereto) and an aryl group having two or more aromatic rings (e.g., a fused-ring aryl group or a polycyclic aryl group) are even more preferred, from the viewpoint of, for example, the affinity for carbon and the properties of improving the strength of a hydraulic composition. Specific preferred examples include a hydroxyphenyl group, a methoxyphenyl group, a 3-hydroxypropylphenyl group, a naphthyl group, a hydroxynaphthyl group, an anthracenyl group, a hydroxyanthracenyl group, a tetracenyl group, a hydroxytetracenyl group, a phenanthrenyl group, a hydroxyphenanthrenyl group, a biphenyl group, a hydroxybiphenyl group, a terphenyl group, a fluorenyl group, a hydroxyfluorenyl group, an acenaphthenyl group, an acenaphthylenyl group, a pyrenyl group, a chrysenyl group, a triphenylenyl group, a polyoxypropylene group with a degree of polymerization of 4 or more, a polyoxybutylene group with a degree of polymerization of 3 or more, and the like.

The hydrophilic group of the organic compound containing a hydrophilic group and a hydrophobic group with a high affinity for carbon is not particularly limited as long as it can increase the water solubility of the organic compound containing a hydrophilic group and a hydrophobic group with a high affinity for carbon. From the viewpoint of, for example, the water solubility of the organic compound containing a hydrophilic group and a hydrophobic group with a high affinity for carbon, the dispersibility of the flaky carbon, and the properties of improving the strength of a hydraulic composition, preferred are hydrophilic groups represented by formulas (1) to (6): 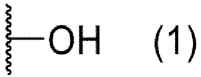 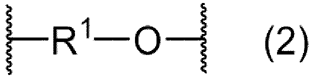 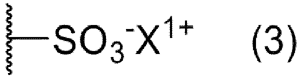 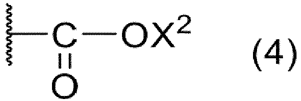 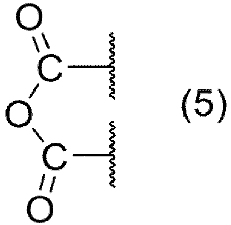 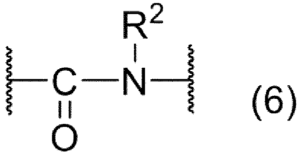 wherein -OH in formula (1) represents a hydroxyl group; the oxygen atom in formula (2) represents an ether bond; formula (5) represents an acid anhydride group; R¹ represents a divalent organic group; R² represents a hydrogen atom or an alkyl group; X¹ represents a hydrogen atom, an alkali metal, NH₄, or an organic ammonium; and X² represents a hydrogen atom, an alkali metal, NH₄, an organic ammonium, or an alkyl group. The organic compound containing a hydrophilic group and a hydrophobic group with a high affinity for carbon may contain one or more of these hydrophilic groups. When a plurality of hydrophilic groups are used, they may be the same hydrophilic groups, a plurality of kinds of hydrophilic groups represented by the same formula, or a plurality of kinds of hydrophilic groups represented by different formulas.

In formula (1), -OH represents a hydroxyl group. In particular, from the viewpoint of hydrophilicity, it is preferred that -OH in formula (1) represents an alcoholic hydroxyl group.

In formula (2), the divalent organic group represented by R¹ is not particularly limited, and is preferably a divalent hydrocarbon group. Examples of divalent hydrocarbon groups include aliphatic hydrocarbon groups (e.g., an alkylene group (or alkylidene group), a cycloalkylene group, an alkylene(or alkylidene)-cycloalkylene group, and a bi- or tricycloalkylene group), aromatic hydrocarbon groups (e.g., an arylene group and an alkylene(or alkylidene)-arylene group), and the like.

In formula (2), the alkylene group (or alkylidene group) represented by R¹ is preferably an alkylene group, more preferably a C₁₋₈ alkylene group, even more preferably a C₁₋₄ alkylene group, particularly preferably a C₂₋₄ alkylene group, and most preferably a C₂₋₃ alkylene group. Specific examples include a methylene group, an ethylene group, an ethylidene group, a trimethylene group, a propylene group, a propylidene group, a tetramethylene group, an ethylethylene group, a butan-2-ylidene group, a 1,2-dimethylethylene group, a pentamethylene group, a pentane-2,3-diyl group, and the like.

In formula (2), the cycloalkylene group represented by R¹ is preferably a C₅₋₁₀ cycloalkylene group, and more preferably a C₅₋₈ cycloalkylene group. Specific examples include a cyclopentylene group, a cyclohexylene group, a methylcyclohexylene group, a cycloheptylene group, and the like.

In formula (2), the alkylene(or alkylidene)-cycloalkylene group represented by R¹ is preferably an alkylene-cycloalkylene group, more preferably a C₁₋₆ alkylene-C₅₋₁₀ cycloalkylene group, and even more preferably a C₁₋₄ alkylene-C₅₋₈ cycloalkylene group. Specific examples include a methylene-cyclohexylene group, an ethylene-cyclohexylene group, an ethylene-methylcyclohexylene group, an ethylidene-cyclohexylene group, and the like.

Specific examples of the bi- or tricycloalkylene group represented by R¹ in formula (2) include a norbornane-diyl group and the like.

In formula (2), the arylene group represented by R¹ is preferably a C₆₋₁₀ arylene group. Specific examples include a phenylene group, a naphthalenediyl group, and the like.

In formula (2), the alkylene(or alkylidene)-arylene group represented by R¹ is preferably an alkylene-arylene group, more preferably a C₁₋₆ alkylene-C₆₋₂₀ arylene group, even more preferably a C₁₋₄ alkylene-C₆₋₁₀ arylene group, and particularly preferably a C₁₋₂ alkylene-phenylene group. Specific examples include a methylene-phenylene group, an ethylene-phenylene group, an ethylene-methylphenylene group, an ethylidenephenylene group, and the like.

Among these, a divalent aliphatic hydrocarbon group, in particular, an alkylene group (e.g., a C₁₋₄ alkylene group, such as a methylene group or an ethylene group), is preferred.

The alkylene(or alkylidene)-cycloalkylene group and the alkylene(or alkylidene)-arylene group are groups represented by -R^{a}-R^{b}- (wherein R^{a} is an alkylene group or alkylidene group each attached to separate oxygen atoms in the formula, and R^{b} represents an cycloalkylene group or an arylene group).

The hydrophilic group represented by formula (2) is not particularly limited, and, for example, -C₂H₄O-, -C₃H₆O-, -CH₂O-, and the like can be used. Groups having a plurality (preferably 3 to 100) of these groups can be preferably used. For example, a trioxyethylene group, a tetraoxyethylene group, polyoxymethylene group, a polyoxyethylene group, and the like can be used. However, polyoxyalkylene groups having 3 or more carbon atoms are hydrophobic groups, as described above; thus, when the number of carbon atoms in R¹ is 3 or more, it is preferred that a single hydrophilic group represented by formula (2) is contained (such a hydrophilic group is not repeated multiple times).

When the compound contains the hydrophilic group represented by formula (2), in particular, a polyoxyethylene group, for example, the properties of improving the strength of a hydraulic composition are particularly enhanced.

In formula (3), the alkali metal represented by X¹ is not particularly limited, and examples include sodium, potassium, lithium, and the like.

In formula (3), the organic ammonium represented by X¹ is preferably quaternary ammonium. Examples of the organic ammonium represented by X¹ that can be suitably used include tetramethylammonium, tetraethylammonium, tetrapropylammonium, tetrabutylammonium, and the like.

The hydrophilic group represented by formula (3) is not particularly limited, and examples include -SO₃⁻H⁺, -SO₃⁻Na⁺, -SO₃⁻K⁺, -SO₃⁻Li⁺, -SO₃⁻NH₄⁺, -SO₃⁻N(CH₃)₄⁺, -SO₃⁻N(C₂H₅)₄⁺, -SO₃⁻N(C₃H₇)₄⁺, -SO₃⁻N(C₄H₉)₄⁺, and the like.

Examples of the alkali metal and organic ammonium represented by X² in formula (4) include those listed above.

In formula (4), the alkyl group represented by X² may be a linear alkyl group or a branched alkyl group, and is preferably a linear alkyl group from the viewpoint of the affinity for carbon and enhancement of the properties of improving the strength of a hydraulic composition and the like. The number of carbon atoms in the alkyl group is preferably 1 to 2, from the viewpoint of, for example, the affinity for carbon and the properties of improving the strength of a hydraulic composition.

The hydrophilic group represented by formula (4) is not particularly limited, and examples include -COOH, -COONa, -COOK, -COOLi, -COONH₄, -COON(CH₃)₄, -COON(C₂H₅)₄, -COON(C₃H₇) ₄⁺, -COON(C₄H₉) ₄⁺, and the like.

The group represented by formula (5) represents an acid anhydride group.

Among these hydrophilic groups, hydrophilic groups represented by formulas (1) to (5) are preferred, hydrophilic groups represented by formulas (1) to (4) are more preferred, and hydrophilic groups represented by formulas (1), (3), and (4) are even more preferred, from the viewpoint of, for example, the water solubility of the organic compound containing a hydrophilic group and a hydrophobic group with a high affinity for carbon, the dispersibility of the flaky carbon, and the properties of improving the strength of a hydraulic composition. Specifically, an alcoholic hydroxyl group, an ether group, -SO₃H, -SO₃Na, -COOH, -COONa, -COOCH₃, an acid anhydride group, a polyoxyethylene group, and the like are preferred, an alcoholic hydroxyl group, an ether group, -SO₃H, -SO₃Na, a polyoxyethylene group, and the like are more preferred, and an alcoholic hydroxyl group, -SO₃H, -SO₃Na, and the like are even more preferred.

Further, in the present invention, when a nonionic material (e.g., a nonionic surfactant) is used as the organic compound containing a hydrophilic group and a hydrophobic group with a high affinity for carbon, the HLB value of the nonionic material is preferably 12 or more, and more preferably 13 to 19, from the viewpoint of, for example, the water solubility of the organic compound containing a hydrophilic group and a hydrophobic group with a high affinity for carbon, the dispersibility of the flaky carbon, and enhancement of the properties of improving the strength of a hydraulic composition and the like. When hydrophobic groups of the organic compound containing a hydrophilic group and a hydrophobic group with a high affinity for carbon are the same (the affinity for the flaky carbon is similar), a higher HLB value is more preferable.

The organic compound containing a hydrophilic group and a hydrophobic group with a high affinity for carbon that satisfies the above conditions is not particularly limited, and examples include chemical admixtures for concrete, such as air-entraining admixtures, water-reducing admixtures, hardening accelerators, air-entraining and water-reducing admixtures, high-range water-reducing admixtures, air-entraining and high-range water-reducing admixtures, and superplasticizers. These chemical admixtures for concrete may be used singly or in a combination of two or more. These chemical admixtures are in accordance with JIS A 6204.

Examples of air-entraining admixtures include, but are not limited to, (special) anionic surfactants, alkyl ether-based anionic surfactants, (natural) resin acid salt-based (special) anionic surfactants, carboxylic acid-based anionic surfactants, (modified) rosin-based anionic surfactants, natural resin acid-based/alkyl ether-based anionic surfactants, (special) nonionic surfactants, (special) anionic/nonionic surfactants, hydrocarbon sulfonates, imidazoline laurate derivatives, polyoxyethylene alkyl ether sulfuric acid salts, and the like. These air-entraining admixtures may be used singly or in a combination of two or more. A complex composed of two or more of these air-entraining admixtures can also be used.

Examples of water-reducing admixtures include, but are not limited to, normal water-reducing admixtures, such as naphthalenesulfonic acid compounds, (modified) ligninsulfonic acid compounds, methylol melamine condensates, polycarboxylic acid compounds, polycarboxylate ether compounds, and oxycarboxylic acid compounds; retarding water-reducing admixtures, such as naphthalenesulfonic acid-formalin (high) condensates, (modified) ligninsulfonic acid compounds, and oxycarboxylic acid compounds; and the like. These water-reducing admixtures may be used singly or in a combination of two or more. A complex composed of two or more of these water-reducing admixtures can also be used.

Examples of hardening accelerators include, but are not limited to, nitrogenous inorganic salt compounds (e.g., nitrous acid salt compounds and nitric acid salt compounds), calcium silicate hydrates, and the like. These hardening accelerators may be used singly or in a combination of two or more. A complex composed of two or more of these hardening accelerators can also be used.

Examples of air-entraining and water-reducing admixtures include, but are not limited to, normal air-entraining and water-reducing admixtures, such as (modified) ligninsulfonic acid compounds, (natural) resin acid salt compounds, organic acid compounds, (special) ether compounds, polyether compounds, (modified) polyol compounds, cellulose ether compounds, polycarboxylic acid compounds, polycarboxylate ether compounds, polycarboxylate polyether polymers, polyalkylene glycol compounds, polycarboxylic acid compounds, oxycarboxylic acid compounds, and PAE compounds; retarding air-entraining and water-reducing admixtures, such as (modified) ligninsulfonic acid compounds, polycarboxylic acid compounds, hydroxycarboxylic acid compounds, oxycarboxylic acid compounds, organic acid compounds, glycitol compounds, natural resin acid compounds, polyether compounds, (special) ether compounds, modified polyol compounds, polyalkylene glycol compounds, polycarboxylate ether compounds, polycarboxylate polyether polymers, cellulose ether compounds, and PAE compounds; accelerating air-entraining and water-reducing admixtures, such as (modified) ligninsulfonic acid compounds, nitrogenous inorganic salt compounds (e.g., nitrous acid salt compounds and nitric acid salt compounds), polycarboxylic acid compounds, organic acid compounds, polycarboxylate ether compounds, modified polyol compounds, thiocyanogen compounds, and amine compounds; and the like. A "PAE compound" means a dispersant composed of a specific polycondensation product. The details of PAE compounds are also described in WO2019/116425, the disclosure of which is incorporated herein by reference. These air-entraining and water-reducing admixtures may be used singly or in combination of two or more. A complex composed of two or more of these air-entraining and water-reducing admixtures can also be used.

Examples of high-range water-reducing admixtures include, but are not limited to, naphthalenesulfonic acid compounds, naphthalenesulfonic acid-formalin (high) condensates, polyether compounds, (modified) polyol compounds, carboxy-containing polyether compounds, polyalkylene glycol compounds, polycarboxylic acid compounds, polycarboxylic acid/(special) thickener complexes, polycarboxylate ether compounds, melamine sulfonic acid compounds, melamine sulfonic acid (high) condensate salts, aminosulfonic acid compounds, nitrogen-containing sulfonic acid salts, amidosulfonic acid-modified melamine condensates, alkylallyl sulfonic acid salt (high) condensates, (modified) methylol melamine condensates, ester compounds, polycarboxylate ether-based compounds, PAE compounds, and the like. A "PAE compound" means a dispersant composed of a specific polycondensation product. The details of PAE compounds are also described in WO2019/116425, the disclosure of which is incorporated herein by reference. These high-range water-reducing admixtures may be used singly or in combination of two or more. A complex composed of two or more of these high-range water-reducing admixtures can also be used.

Examples of air-entraining and high-range water-reducing admixtures include, but are not limited to, normal air-entraining and high-range water-reducing admixtures, such as (modified) ligninsulfonic acid compounds, aminosulfonic acid compounds, polycarboxylic acid compounds, polyether compounds, carboxy-containing polyether compounds, polyalkylene glycol compounds, ester compounds, and PAE compounds; retarding air-entraining and high-range water-reducing admixtures, such as (modified) ligninsulfonic acid compounds, polycarboxylic acid compounds, polycarboxylate ether compounds, polyether compounds, carboxy-containing polyether compounds, polyalkylene glycol compounds, and PAE compounds; and the like. A "PAE compound" means a dispersant composed of a specific polycondensation product. The details of PAE compounds are also described in WO2019/116425, the disclosure of which is incorporated herein by reference. These air-entraining and high-range water-reducing admixtures may be used singly or in combination of two or more. A complex composed of two or more of these air-entraining and high-range water-reducing admixtures can also be used.

Examples of superplasticizers include, but are not limited to, normal superplasticizers, such as melamine sulfonic acid compounds, alkylallyl sulfonic acid (high) condensates, (special) polycarboxylic acid compounds, polycarboxylate ether compounds, (special) hydroxycarboxylic acid compounds, oxycarboxylic acid compounds, and polyalkylene glycol compounds; retarding superplasticizers, such as polycarboxylic acid compounds and polycarboxylate ether compounds; and the like. These superplasticizers may be used singly or in a combination of two or more. A complex composed of two or more of these superplasticizers can also be used.

Examples of usable organic compounds containing a hydrophilic group and a hydrophobic group with a high affinity for carbon include Mighty AE-03, Mighty 100, Mighty 150, Mighty 150RX, Mighty 21HS, Mighty 21VS, Mighty 21HF, Mighty 21LV, Mighty 21LV-S, Mighty 21HP, Mighty 3000TH, Mighty 150R, Mighty 1000S, Mighty 1000Z, Mighty 1000SR, Mighty 1000ZR, Mighty 3000S, Mighty 3000H, Mighty 3000V, and Mighty 3000SR, all of which are produced by Kao Corporation; Daravair AEA, Daravair AEA-FA, Daravair TA, Daravair AEA-S, Daravair AE-140G, Daratard, Daratard HC Block Mix S, Daracem M-F, Daracem M, Daracem M-E, Daracem MR-F, Daracem MR, Block Mix D, Block Mix G, Super 200, Super 120IF, Super 300N, Super 300M, Super 300E, Super 300ES, Super 300CF, Super 300K, Super 300P, Super 1000N, Super 1000N-213, Super 100pHX, Super 100pHW, Super 100pEC, Super 20F, Super 30F, FT-3S, FTN-30, FTN-30S, ADVA-CAST, ADVA-SHOT, ADVA-FLOW, ADVA-SRA100, ADVA-PLUS, PolarSet, PolarSet N-2, PolarSet EX-3, WRDA, P-7, F-1, F-1P, F-1R, and NC-3, all of which are produced by GCP Chemicals K.K.; AE-200, AE-300, AE-400, Chupol C, Chupol FA-10, Chupol NV-80, Chupol NV-80E, Chupol NV-S, Chupol SSP-104, Chupol SSP-104H, Chupol HSP, Chupol EX, Chupol EX20, Chupol EX50, Chupol EX60, Chupol EX60T, Chupol EX60LB, Chupol LS-A, Chupol NR, Chupol NR20, Chupol EX50R, Chupol EX60R, Chupol EX60TR, Chupol EX60LBR, Chupol LS-AR, Chupol NZ, Chupol HP-8, Chupol HP-11, Chupol HP-11W, Chupol SR, Chupol HP-70, Chupol HP-70B, Chupol HF-70, Chupol HF-70R, Polefine MF, Polefine 510, Polefine SPA-2, and Highfluid H, all of which are produced by Takemoto Oil & Fat Co., Ltd.; Sika AER-20, Sika AER-50, Sika AER-G, Sika AER-FA, Sika PC-165A, Sika AF-15, Sikament FF, Sikament FF86, Sikament 1200N, Sikament 1200N-AS, Sikament 2200, Sikament 2400, Sikament 2200FS, Sikament FF24, Sikament J, Sikament JS, Sikament JS-AS, Sikament JR, Sikament JSR, Sikament JSR-AS, Sikament 1100NT, Sikament 1100NT-AS, Sikament 1100NT-H, Sikament 2300, Sikament 2500, Sikament 1100NTV, Sikament 2300FS, Sikament OVSP, SikaRapid C-100WS, Plastocrete NC, Plastocrete 20N, Plastocrete 30N, Plastocrete R, Plastocrete 20R, Plastocrete 30R, and Plastiment, all of which are produced by Sika Japan Ltd.; MasterAir 101, MasterAir 202, MasterAir 303A, MasterAir 775, MasterAir 775S, MasterAir 785, MasterAir 785D, MasterGlenium SP8HU, MasterGlenium 8000S, MasterGlenium 8000E, MasterGlenium 8000H, MasterGlenium 8000P, MasterGlenium 8000W, MasterGlenium 8000DS, MasterGlenium NT1000, MasterGlenium NT500, MasterGlenium ACE390, MasterGlenium 6520, MasterGlenium UG2000, MasterGlenium SP8N, MasterGlenium SP8S, MasterGlenium SP8SV, MasterGlenium SP8SB, MasterGlenium SP8HV, MasterGlenium 800S, MasterGlenium 6500, MasterGlenium NP80, MasterGlenium 6510, MasterEase 5070, MasterEase 3030, MasterEase 8000, MasterSure 350, MasterPozzolith No.89, MasterPozzolith No.70, MasterPozzolith No.70L, MasterPozzolith 78S, MasterPozzolith 78P, MasterPozzolith No.75, MasterPozzolith No.8, MasterPozzolith No.70LR, MasterPozzolith 78R, MasterSet FZP99, Master X-Seed 120JP, MasterPolyheed 15L, MasterPolyheed 15S, MasterPolyheed 15SC, MasterPolyheed 15H, MasterPolyheed 15DS, MasterPolyheed 15LR, MasterPolyheed 15SR, MasterPolyheed 15SRC, MasterPolyheed 15HR, MasterPolyheed 15DSR, MasterPolyheed 1505, MasterPolyheed 2000, MasterPolyheed 1500, MasterRheosure 150, MasterRheosure 700, MasterRheosure 155, MasterRheosure 705, and Nonfreeze, all of which are produced by BASF Japan Ltd.; Flowric AE-4, Flowric AE-6, Flowric AE-9B, Flowric AE150, Flowric AE400, Flowric MA, Flowric PS, Flowric PSR110, Flowric MS, Flowric VP200, Flowric PC, Flowric VP700, Flowric VP900M, Flowric VP900A, Flowric SF500U, Flowric SF500UK, Flowric TN, Flowric H60, Flowric VP10, Flowric PA, Flowric T, Flowric AFP-2, Flowric S, Flowric SG, Flowric SV, Flowric LB, Flowric SV10L, Flowric SV10, Flowric SV10H, Flowric SV10K, Flowric R, Flowric RG, Flowric RV, Flowric RV10L, Flowric RV10, Flowric RV10H, Flowric RV10K, Flowric A, Flowric AC, Flowric AFP, Flowric SF200S, Flowric SF500S, Flowric SF500H, Flowric SF500SK, Flowric SF500F, Flowric SF500BB, Flowric FBP, Flowric NSW, Flowric SF500FP, and Flowric FBL-200, all of which are produced by Flowric Co., Ltd.; Vinsol, Vinsol W, Vinsol 70, Vinsol 70LT, Vinsol 80, Vinsol 80S, Vinsol 80R, Vinsol 80SR, Vinsol 80NC, Yamaso AE456, Yamaso V1H-U, Yamaso R, Yamaso WIN S, Yamaso 80P, Yamaso 90, Yamaso 90SE, Yamaso 02NL, Yamaso 02NL-P, Yamaso 09NL, Yamaso 09NL-P, Yamaso DS-X, Yamaso 16NB, Yamaso 90R, Yamaso 90SER, Yamaso 02NLR, Yamaso 02NLR-P, Yamaso 09NLR, Yamaso 09NLR-P, Yamaso DSR-X, Yamaso 16NBR, Yamaso V1S, Yamaso V1H, Yamaso V1-DS, Yamaso V1-FT, and Yamaso WIN, all of which are produced by Yamaso Chemical Co., Ltd.; Akuserito 100 and Super Melamine, both of which are produced by Nissan Chemical Industries, Ltd.; Leopack G-100 and Leopack G-200, both of which are produced by Lion Corporation; and the like. These organic compounds containing a hydrophilic group and a hydrophobic group with a high affinity for carbon may be used singly or in a combination of two or more. A complex composed of two or more of these compounds can also be used.

The content of the organic compound containing a hydrophilic group and a hydrophobic group with a high affinity for carbon in the additive for a hydraulic composition of the present invention is not particularly limited, and is preferably 0.1 to 50 mass%, more preferably 0.2 to 40 mass%, and even more preferably 0.3 to 30 mass%, based on the total amount of the additive for a hydraulic composition of the present invention taken as 100 mass%, from the viewpoint of, for example, the water solubility of the organic compound containing a hydrophilic group and a hydrophobic group with a high affinity for carbon, the dispersibility of the flaky carbon, and the properties of improving the strength of a hydraulic composition.

The content of the organic compound containing a hydrophilic group and a hydrophobic group with a high affinity for carbon in the additive for a hydraulic composition of the present invention is not particularly limited, and is preferably 10 to 1000 parts by mass, more preferably 20 to 500 parts by mass, and even more preferably 30 to 300 parts by mass, per 100 parts by mass of the flaky carbon, from the viewpoint of, for example, the water solubility of the organic compound containing a hydrophilic group and a hydrophobic group with a high affinity for carbon, the dispersibility of the flaky carbon, and the properties of improving the strength of a hydraulic composition.

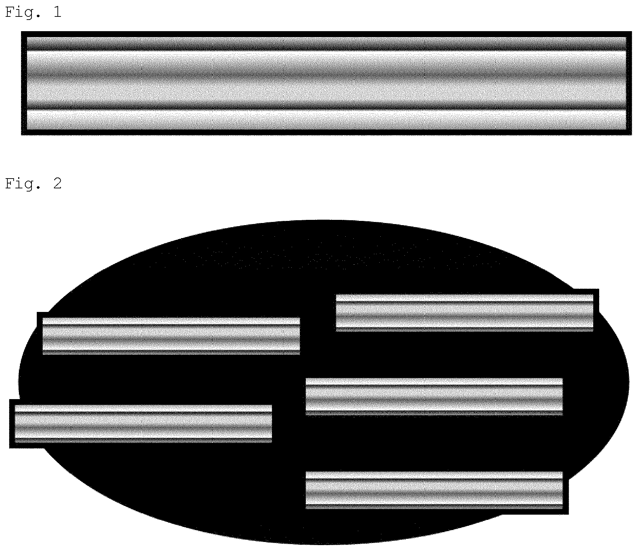

When the content of the organic compound containing a hydrophilic group and a hydrophobic group with a high affinity for carbon is small, the additive for a hydraulic composition of the present invention has a configuration in which the surface of the flaky carbon is coated with the organic compound containing a hydrophilic group and a hydrophobic group with a high affinity for carbon (Fig. 1). When the content of the organic compound containing a hydrophilic group and a hydrophobic group with a high affinity for carbon is large, the additive for a hydraulic composition of the present invention has a configuration in which the flaky carbon is dispersed in the organic compound containing a hydrophilic group and a hydrophobic group with a high affinity for carbon (Fig. 2). In both cases, the presence of the organic compound containing a hydrophilic group and a hydrophobic group with a high affinity for carbon around the flaky carbon makes it possible to obtain a material that suppresses the aggregation of the flaky carbon, improves the dispersibility of the flaky carbon, and enhances the properties of improving the strength of a hydraulic composition.

### (1-3) Other Components

The additive for a hydraulic composition of the present invention may contain one or more other components in addition to the flaky carbon and the organic compound containing a hydrophilic group and a hydrophobic group with a high affinity for carbon. Examples of the other components include carbon fibers (in particular, carbon nanofibers having a fiber diameter of 500 nm or less), activated carbon, carbon black (e.g., acetylene black and oil furnace black; in particular, Ketjen black with high conductivity and a large specific surface area), glassy carbon, carbon microcoils, fullerenes, biomass carbon materials (e.g., materials made from bagasse, sorghum, wood chips, sawdust, bamboo, tree bark, rice straw, rice husks, coffee grounds, used tea leaves, soy pulp, rice bran, pulp waste, etc.; and carbon fibers produced from lignin), cellulose nanofibers, boron nitride, molybdenum compounds (e.g., molybdenum disulfide and organic molybdenum), tungsten disulfide, melamine cyanurate, phthalocyanine, lead oxide, calcium fluoride, layered minerals (e.g., mica and talc), and the like. These other components may be used as long as the effects of the present invention are not impaired.

However, from the viewpoint of, for example, the water solubility of the organic compound containing a hydrophilic group and a hydrophobic group with a high affinity for carbon, the dispersibility of the flaky carbon, and the properties of improving the strength of a hydraulic composition, the content of the other components is preferably low, and is preferably 0.01 to 10 mass%, and more preferably 0.02 to 5 mass%, based on the total amount of the additive for a hydraulic composition of the present invention taken as 100 mass%.

The form of the additive for a hydraulic composition of the present invention is not particularly limited, and the additive for a hydraulic composition of the present invention may be in the form of, for example, a coating film, a sheet, or a mass. In addition, the additive for a hydraulic composition of the present invention is not limited to solids. The additive for a hydraulic composition of the present invention may contain water and be an aqueous dispersion described later.

The additive for a hydraulic composition of the present invention is a material that is excellent in the water solubility of the organic compound containing a hydrophilic group and a hydrophobic group with a high affinity for carbon and improves the dispersibility of the flaky carbon and the properties of improving the strength of a hydraulic composition, as described above.

The additive for a hydraulic composition of the present invention is a material that can be added to a hydraulic composition to improve the strength after hardening, and can be used for pastes, mortar, concrete, and the like.

### 2. Method for Producing Additive for Hydraulic Composition

For example, the additive for a hydraulic composition of the present invention can be produced using a water-containing solvent in which the content of the water is 70 mass% or more of the solvent. The additive for a hydraulic composition of the present invention can be produced by subjecting at least one carbonaceous material dispersion that contains a carbonaceous material having a layered structure, a water-soluble compound containing a hydrophobic group with a high affinity for carbon and a hydrophilic group, and the solvent to pressure treatment at 30 MPa or more, wherein at least one treatment selected from the group consisting of the following (i) to (iii) is performed by the pressure treatment:
(i) two or more carbonaceous material dispersions that are the at least one carbonaceous material dispersion are collided with each other;
(ii) the carbonaceous material dispersion is collided with a metal or a ceramic material; and
(iii) the carbonaceous material dispersion is passed through a space with a cross-sectional area of 1 cm² or less. Alternatively, the additive for a hydraulic composition of the present invention can be produced by placing a composition that contains a carbonaceous material having a layered structure, a water-soluble compound containing a hydrophobic group with a high affinity for carbon and a hydrophilic group, and the solvent between a rotary plate configured to rotate and a plate disposed substantially parallel to the rotary plate, and applying shear to the carbonaceous material in the composition while adjusting the shortest distance between the rotary plate and the plate to 50 µm or less.

### (2-1) Dispersion (Flaky Carbon Dispersion)

In the dispersion (flaky carbon dispersion) that contains flaky carbon, an organic compound containing a hydrophilic group and a hydrophobic group with a high affinity for carbon, and a solvent, the flaky carbon and the organic compound containing a hydrophilic group and a hydrophobic group with a high affinity for carbon may be as described above. The flaky carbon dispersion may contain one or more other components described above, if necessary.

The flaky carbon dispersion may be formed as a dispersion liquid or may be formed as a coating film on a substrate. In this case, as a solvent used to prepare the flaky carbon dispersion (flaky carbon dispersion liquid or flaky carbon coating film), it is preferable to use water as a main solvent from the viewpoint of, for example, the dispersibility of the flaky carbon and the properties of improving the strength of a hydraulic composition.

The content of the water in the solvent used is not particularly limited, and is preferably 70 mass% or more (70 to 100 mass%), and more preferably 75 to 100 mass%, based on the total amount of the solvent taken as 100 mass%, from the viewpoint of, for example, the dispersibility of the flaky carbon and the properties of improving the strength of a hydraulic composition.

In the present invention, as the solvent, only water may be used, and an organic solvent may not necessarily be used. However, an organic solvent may be used to further improve the water solubility of the organic compound containing a hydrophilic group and a hydrophobic group with a high affinity for carbon. Examples of organic solvents include monohydric alcohols, such as methanol, ethanol, n-propyl alcohol, isopropyl alcohol, n-butyl alcohol, isobutyl alcohol, sec-butyl alcohol, and tert-butyl alcohol; polyhydric alcohols, such as ethylene glycol and glycerol; 2-methoxyethanol; and the like.

The content of the organic solvent in the solvent used is preferably 30 mass% or less (0 to 30 mass%), and more preferably 5 to 25 mass%, based on the total amount of the solvent taken as 100 mass%, from the viewpoint of, for example, the solubility of the organic compound containing a hydrophilic group and a hydrophobic group with a high affinity for carbon and the properties of improving the strength of a hydraulic composition.

The content of the flaky carbon in the flaky carbon dispersion is not particularly limited, and is preferably 30 mass% or less, more preferably 0.001 to 20 mass%, and even more preferably 0.1 to 10 mass%, based on the total amount of the flaky carbon dispersion taken as 100 mass%, from the viewpoint of easily obtaining the composition of the additive for a hydraulic composition of the present invention. The content of the organic compound containing a hydrophilic group and a hydrophobic group with a high affinity for carbon is also not particularly limited, and is preferably 0.01 to 50 mass%, more preferably 0.1 to 40 mass%, and even more preferably 0.5 to 30 mass%, based on the total amount of the flaky carbon dispersion taken as 100 mass%, from the viewpoint of easily obtaining the composition of the durability improver of the present invention. The content of the organic compound containing a hydrophilic group and a hydrophobic group with a high affinity for carbon in the flaky carbon dispersion is also not particularly limited, and is preferably 10 to 1000 parts by mass, more preferably 20 to 500 parts by mass, and even more preferably 30 to 300 parts by mass, per 100 parts by mass of the flaky carbon, from the viewpoint of easily obtaining the composition of the additive for a hydraulic composition of the present invention. Further, the content of the solvent is not particularly limited, and is preferably 50 to 99.9998 mass%, more preferably 60 to 99.998 mass%, and even more preferably 70 to 99.98 mass%, based on the total amount of the flaky carbon dispersion taken as 100 mass%, from the viewpoint of easily obtaining the composition of the additive for a hydraulic composition of the present invention.

### (2-2) Method for Producing Flaky Carbon Dispersion

In the present invention, the method for producing the flaky carbon dispersion is not particularly limited, and flaky carbon and an organic compound containing a hydrophilic group and a hydrophobic group with a high affinity for carbon can be added to a solvent. Specifically, flaky carbon can be added to a dispersion of an organic compound containing a hydrophilic group and a hydrophobic group with a high affinity for carbon, or an organic compound containing a hydrophilic group and a hydrophobic group with a high affinity for carbon can be added to a dispersion of flaky carbon. Flaky carbon and an organic compound containing a hydrophilic group and a hydrophobic group with a high affinity for carbon can also be simultaneously added to a solvent.

However, from the viewpoint of further improving the dispersibility of flaky carbon to make it less likely for the flaky carbon to aggregate and further improving the strength of the resulting hydraulic composition of the present invention, it is preferable to place a composition that contains a carbonaceous material having a layered structure and an organic compound containing a hydrophilic group and a hydrophobic group with a high affinity for carbon between a rotary plate configured to rotate and a plate disposed substantially parallel to the rotary plate, and apply shear to the carbonaceous material in the composition while adjusting the shortest distance between the rotary plate and the plate to 200 µm or less (grinding method).

The flaky carbon dispersion can also be preferably produced by subjecting a composition that contains a carbonaceous material having a layered structure and an organic compound containing a hydrophilic group and a hydrophobic group with a high affinity for carbon to pressure treatment at 30 MPa or more (high-pressure dispersion method).

Conventionally, when flaky carbon is prepared by a wet method, an aqueous dispersion containing an oxide of flaky carbon and an aqueous solvent is subjected to reduction treatment. However, with this method, it is difficult to maintain the graphene structure, and the resulting flaky carbon severely aggregates, making it difficult to obtain an aqueous flaky carbon dispersion. This method also has problems from a safety perspective. On the other hand, in the present invention, the use of the organic compound containing a hydrophilic group and a hydrophobic group with a high affinity for carbon makes it possible to obtain flaky carbon that maintains a graphene structure in a state in which the flaky carbon is uniformly dispersed without aggregation (flaky carbon dispersion), and the resulting flaky carbon is less likely to be destroyed. Further, the flaky carbon can be obtained in a short period of time, and lumps that fail to exfoliate are also less likely to remain. In this case, the organic compound containing a hydrophilic group and a hydrophobic group with a high affinity for carbon can also function as a dispersant for uniformly dispersing flaky carbon.

Moreover, according to the shearing method, the direction in which force is applied is parallel to the plane direction of the carbonaceous material having a layered structure, and the treatment is performed in a narrow space. It is thus possible to obtain flaky carbon that is less likely to be destroyed and has a larger size (e.g., flaky carbon with a size of 1 µm or more) than when conventional production methods using high-speed stirring, ultrasonic treatment, etc. are performed. Additionally, due to efficient exfoliation, the treatment can be performed in a short period of time (fewer passes), and thick lumps that fail to exfoliate are less likely to remain.

### Carbonaceous Material Having Layered Structure

The carbonaceous material having a layered structure is not particularly limited, and examples include natural graphite, synthetic graphite, expandable graphite, amorphous graphite, graphite oxide, and the like. As graphite oxide, for example, graphite oxidized by one or more oxidizing agents, such as sulfuric acid, nitric acid, potassium permanganate, and hydrogen peroxide, can be used. For example, when graphite oxide is obtained by the Hummers method, graphite is soaked in concentrated sulfuric acid, potassium permanganate is added to oxidize the graphite, and the reaction product is quenched with dilute sulfuric acid and/or hydrogen peroxide and washed with distilled water, whereby oxygen atoms are bonded to carbon atoms, and oxygen atoms are introduced between the layers to obtain graphite oxide.

In particular, when high-purity flaky carbon that contains no heteroatoms, such as oxygen, is obtained, it is preferable to use graphite as a raw material, and natural graphite and expandable graphite are more preferred. When expandable graphite is used, it is preferable to use expandable graphite in which the graphene structure is less oxidized. When expandable graphite is used, it may be used after heat treatment at about 300 to 1000°C for about 10 seconds to 5 hours. This allows expandable graphite to be properly expanded.

When importance is placed on ease of production, graphite oxide may be used. The use of graphite oxide allows solvent molecules to be easily inserted between the layers, making exfoliation only in the layer direction easier and improving flaking efficiency and dispersibility; thus, the treatment time can be reduced. However, when graphite oxide is used, reduction treatment is required afterwards. From the viewpoint of further maintaining the graphene structure, conductivity, and strength, other materials (natural graphite, synthetic graphite, expandable graphite, and amorphous graphite) are preferred.

To further improve dispersibility, it is also possible to use amorphous graphite. However, from the viewpoint of crystallinity, purity and structure maintenance, other materials (natural graphite, synthetic graphite, expandable graphite, and graphite oxide) are preferred.

When importance is placed on, for example, the crystallinity, strength, and structure maintenance of the resulting flaky carbon, synthetic graphite can also be used.

In the present invention, the content of the carbonaceous material having a layered structure in the composition that contains a carbonaceous material having a layered structure and an organic compound containing a hydrophilic group and a hydrophobic group with a high affinity for carbon is not particularly limited, and is preferably 30 mass% or less, more preferably 0.001 to 20 mass%, and even more preferably 0.1 to 10 mass%, based on the total amount of the composition used to produce the flaky carbon dispersion taken as 100 mass%. The lower the content of the carbonaceous material having a layered structure, the more likely flaking (delamination) is to occur; thus, flaky carbon tends to be more efficiently obtained, resulting in a reduction in the number of processes, and the viscosity tends to be appropriately maintained to easily perform the shear treatment etc. On the other hand, the higher the content of the carbonaceous material having a layered structure, the better the productivity. It is thus preferable to appropriately set the content of the carbonaceous material having a layered structure from the viewpoint of the balance between flaking efficiency, viscosity, productivity, and the like. When a carbonaceous material dispersion is used, the content of the carbonaceous material having a layered structure in the flaky carbon dispersion is preferably within the ranges described above.

### Organic Compound Containing Hydrophilic Group and Hydrophobic Group with High Affinity for Carbon

The organic compound containing a hydrophilic group and a hydrophobic group with a high affinity for carbon may be as described above.

In the present invention, the content of the organic compound containing a hydrophilic group and a hydrophobic group with a high affinity for carbon in the composition used to produce the flaky carbon dispersion is not particularly limited, and is preferably 0.01 to 50 mass%, more preferably 0.1 to 40 mass%, and even more preferably 0.5 to 30 mass%, based on the total amount of the composition used to produce the flaky carbon dispersion taken as 100 mass%. In the present invention, the content of the organic compound containing a hydrophilic group and a hydrophobic group with a high affinity for carbon in the composition used to produce the flaky carbon dispersion is preferably 1 to 1000 parts by mass, more preferably 20 to 500 parts by mass, and even more preferably 30 to 300 parts by mass, per 100 parts by mass of the carbonaceous material having a layered structure. The lower the content of the organic compound containing a hydrophilic group and a hydrophobic group with a high affinity for carbon, the relatively higher the content of the carbonaceous material having a layered structure; thus, the strength of a hydraulic composition is easily improved, and the processing is inexpensive. On the other hand, the higher the content of the organic compound containing a hydrophilic group and a hydrophobic group with a high affinity for carbon, the more likely flaking (delamination) is to occur; thus, flaky carbon tends to be more efficiently obtained. However, high viscosity may reduce flaking efficiency. It is thus preferable to appropriately set the content of the organic compound containing a hydrophilic group and a hydrophobic group with a high affinity for carbon from the viewpoint of the balance between the strength of a hydraulic composition, cost, flaking efficiency, and the like. In this production method, when a carbonaceous material dispersion is used, the content of the organic compound containing a hydrophilic group and a hydrophobic group with a high affinity for carbon in the carbonaceous material dispersion is preferably within the ranges described above.

### Solvent

In the method for producing the flaky carbon dispersion, it is preferable to perform a specific treatment using the composition that contains the carbonaceous material having a layered structure and the organic compound containing a hydrophilic group and a hydrophobic group with a high affinity for carbon, as described above. From the viewpoint of, for example, the flaking efficiency of the carbonaceous material having a layered structure and an improvement in the strength of the resulting hydraulic composition, it is preferred that a carbonaceous material dispersion that contains the carbonaceous material having a layered structure and the organic compound containing a hydrophilic group and a hydrophobic group with a high affinity for carbon is subjected to a specific treatment.

The carbonaceous material dispersion may be formed as a dispersion liquid or may be formed as a coating film on a substrate.

In this case, as a solvent used to prepare the carbonaceous material dispersion (carbonaceous material dispersion liquid or carbonaceous material coating film), the solvent described above can be used.

In the present invention, when a specific treatment is performed using a carbonaceous material dispersion containing a solvent, the total amount of the solvent in the carbonaceous material dispersion is not particularly limited, and is preferably 50 to 99.9998 mass%, more preferably 60 to 99.998 mass%, and even more preferably 70 to 99.98 mass%, based on the total amount of the carbonaceous material dispersion taken as 100 mass%, from the viewpoint of, for example, the flaking efficiency of the carbonaceous material having a layered structure and the solubility of the organic compound containing a hydrophilic group and a hydrophobic group with a high affinity for carbon.

In the present invention, when a specific treatment is performed using a carbonaceous material dispersion containing a solvent, the carbonaceous material dispersion may be prepared by adding the carbonaceous material having a layered structure to a dispersion of the organic compound containing a hydrophilic group and a hydrophobic group with a high affinity for carbon, or by adding the organic compound containing a hydrophilic group and a hydrophobic group with a high affinity for carbon to a dispersion of the carbonaceous material having a layered structure. The carbonaceous material having a layered structure and the organic compound containing a hydrophilic group and a hydrophobic group with a high affinity for carbon may be simultaneously added to a solvent.

### Other Components

In the present invention, the composition that contains the carbonaceous material having a layered structure and the organic compound containing a hydrophilic group and a hydrophobic group with a high affinity for carbon (e.g., carbonaceous material dispersion) may contain one or more other components. This allows the finally obtained flaky carbon dispersion and additive for a hydraulic composition to also contain the other components. The other components may be those described above. These other components may be used as long as the effects of the present invention are not impaired.

However, from the viewpoint of, for example, the water solubility of the organic compound containing a hydrophilic group and a hydrophobic group with a high affinity for carbon, the dispersibility of the flaky carbon, and the properties of improving the strength of a hydraulic composition, the content of the other components is preferably low, and is preferably 0.00001 to 5 mass%, and more preferably 0.0001 to 2 mass%, based on the total amount of the carbonaceous material dispersion taken as 100 mass%.

### Shear Treatment (Grinding Method)

In the present invention, when the grinding method is used, it is preferable to place a composition that contains the carbonaceous material having a layered structure and the organic compound containing a hydrophilic group and a hydrophobic group with a high affinity for carbon between a rotary plate configured to rotate and a plate disposed substantially parallel to the rotary plate, and apply shear to the carbonaceous material in the composition while adjusting the shortest distance between the rotary plate and the plate to 200 µm or less, as described above. When a carbonaceous material dispersion is used, it is preferable to place the carbonaceous material dispersion between a rotary plate configured to rotate and a plate disposed substantially parallel to the rotary plate, and apply shear to the carbonaceous material in the carbonaceous material dispersion while adjusting the shortest distance between the rotary plate and the plate to 200 µm or less.

By the shear treatment, pulverization of the carbonaceous material having a layered structure occurs, and, depending on the conditions, the graphene structure may not be maintained. However, the shear treatment allows efficient flaking of the carbonaceous material having a layered structure, thus reducing the treatment time. When the shear treatment is performed, the rotary plate and the plate are placed substantially parallel to each other, but may not be strictly parallel to each other. Specifically, the angle between the axis perpendicular to the rotary plate and the axis perpendicular to the plate is preferably 10° or less, and more preferably 5° or less. It is most preferred that the axis perpendicular to the rotary plate and the axis perpendicular to the plate are strictly parallel to each other. When the shear treatment is performed, the shortest distance between the two plates is not particularly limited as long as the carbonaceous material having a layered structure can be sufficiently flaked. The shortest distance between the two plates is preferably 200 µm or less, more preferably 50 µm or less, and even more preferably 30 µm or less. When the shear treatment is performed, the shorter the shortest distance between the two plates, the more excellent the flaking efficiency. The shortest distance between the two plates is generally 0 µm. In the present invention, the shortest distance between the two plates when the shear treatment is performed means the distance obtained by subtracting the thickness of the composition that contains the carbonaceous material having a layered structure and the organic compound containing a hydrophilic group and a hydrophobic group with a high affinity for carbon from the actually measured shortest distance between the rotary plate and the plate. In other words, the shortest distance between the rotary plate and the plate being 0 µm means that the composition that contains the carbonaceous material having a layered structure and the organic compound containing a hydrophilic group and a hydrophobic group with a high affinity for carbon is closely placed between the rotary plate and the plate; that is, there is no space other than the carbonaceous material having a layered structure and the organic compound containing a hydrophilic group and a hydrophobic group with a high affinity for carbon between the rotary plate and the plate. Although the rotary plate and the plate are placed substantially parallel to each other, the distance between the rotary plate and the plate may vary from point to point. In this case, the shortest distance between the rotary plate and the plate means the distance between the rotary plate and the plate at the point where the rotary plate and the plate are closest to each other. In addition, the rotary plate and the plate are not necessarily spaced apart from each other in advance. The material to be treated may be sandwiched between the rotary plate and the plate, or the rotary plate and the plate may be in contact with each other, and the carbonaceous material having a layered structure may be caught between them to space the rotary plate and the plate apart from each other. The shear treatment may be performed using a stone mill, a vibratory mixer, a spin coater, a grinder, or the like as long as there is a mechanism for rotating a platelike object.

The sizes of the rotary plate and the plate used in the treatment are not particularly limited, and are preferably 5 to 500 mm, and more preferably 10 to 200 mm. The rotation speed of the rotary plate when the shear treatment is performed is not particularly limited, and is preferably within the range in which the carbonaceous material having a layered structure can be sufficiently flaked. The rotation speed of the rotary plate is, for example, preferably 1000 to 10000 ppm, and more preferably 1500 to 3000 ppm.

By performing the shear treatment, shear can be applied to the carbonaceous material having a layered structure in a direction parallel to the graphene layer of the carbonaceous material having a layered structure by contacting the plates with the carbonaceous materials having a layered structure, and contacting the carbonaceous materials having a layered structure with the carbonaceous materials having a layered structure.

By reducing the shortest distance between the rotary plate and the plate in the shear treatment and increasing the rotation speed of the rotary plate, the severity of conditions can be increased, the carbonaceous material having a layered structure can be more efficiently flaked, and the treatment time can be further reduced. This shear operation can be performed one or more times, preferably three or more times.

The temperature at which the shear treatment is performed is not particularly limited as long as the carbonaceous material having a layered structure can be sufficiently flaked. The temperature at which the shear treatment is performed can be 0°C or more, further 0 to 100°C, particularly 20 to 95°C. The temperature at which the shear treatment is performed is preferably under conditions in which the solubility of the organic compound containing a hydrophilic group and a hydrophobic group with a high affinity for carbon is high. When the solubility increases at a higher temperature, the temperature at which the shear treatment is performed is preferably higher. When a water-soluble compound with a cloud point is used, the temperature at which the shear treatment is performed is preferably maintained the cloud point or below.

Before the shear treatment, the carbonaceous material having a layered structure and the organic compound containing a hydrophilic group and a hydrophobic group with a high affinity for carbon may be stirred with a stirrer, an ultrasonic dispersion device, or the like in advance before preparing the composition to apply the organic compound containing a hydrophilic group and a hydrophobic group with a high affinity for carbon to the surface of the carbonaceous material having a layered structure, in order to allow good contact of the carbonaceous material with the organic compound.

In the present invention, when graphite oxide is used as the carbonaceous material having a layered structure, it is present as an oxide of flaky carbon in the dispersion that has been subjected to the shear treatment. Thus, when graphite oxide is used as the carbonaceous material having a layered structure, it is preferable to perform reduction treatment as post-treatment. Various methods, such as chemical reduction and electrochemical reduction, can be used as the reduction treatment, and chemical reduction is preferred. In particular, chemical reduction with a reducing agent, such as hydrazine or sodium borohydride, is preferred. The amount of the reducing agent is preferably 1 to 1000 parts by mass, more preferably 20 to 500 parts by mass, and even more preferably 30 to 300 parts by mass, per 100 parts by mass of the oxide of flaky carbon. In addition, when heating is performed at the time of reduction, reduction becomes easier. The heating temperature is preferably 40 to 200°C, more preferably 50 to 150°C, and even more preferably 60 to 120°C. The reduction time is preferably 10 minutes to 64 hours, more preferably 30 minutes to 48 hours, and even more preferably 1 to 24 hours. However, the reduction time is preferably set so that the graphene structure is not excessively destroyed.

According to the production method described above, flaky carbon can be obtained as the flaky carbon dispersion described above. In the production method, since the composition contains the organic compound containing a hydrophilic group and a hydrophobic group with a high affinity for carbon, the flaky carbon dispersion also contains the organic compound containing a hydrophilic group and a hydrophobic group with a high affinity for carbon. The organic compound containing a hydrophilic group and a hydrophobic group with a high affinity for carbon can be adsorbed on the surface of flaky carbon to allow isolated dispersion of flaky carbon at a high concentration in the solvent, and thus also functions as a dispersant in the flaky carbon dispersion. In the present invention, the organic compound containing a hydrophilic group and a hydrophobic group with a high affinity for carbon is adsorbed on the surface of flaky carbon, and as an index of the amount of adsorption, the weight loss in the range of 100 to 450°C, which can eliminate the effect of adsorption water when heated to 450°C by TG-DTA (thermogravimetry), is preferably 2.00 to 20.00 mass%, and more preferably 3.00 to 10.00 mass%. This allows the strength of a hydraulic composition to be particularly improved. The organic compound containing a hydrophilic group and a hydrophobic group with a high affinity for carbon may be a commercially available product and is superior to conventional products in terms of both cost and dispersibility. Further, the organic compound containing a hydrophilic group and a hydrophobic group with a high affinity for carbon can provide sufficient strength to a hydraulic composition by remaining on the surface of flaky carbon. However, the organic compound containing a hydrophilic group and a hydrophobic group with a high affinity for carbon may be present near flaky carbon without adsorbing on the surface of flaky carbon. Even in the state in which the organic compound containing a hydrophilic group and a hydrophobic group with a high affinity for carbon is not adsorbed on the surface of flaky carbon, the presence of the organic compound between pieces of flaky carbon easily prevents strong aggregation due to the van der Waals force between pieces of flaky carbon and easily promotes dispersion after addition to concrete. When the additive for a hydraulic composition is solid and also contains the organic compound in addition to the organic compound adsorbed on the surface of flaky carbon, the amount of the organic compound containing a hydrophilic group and a hydrophobic group with a high affinity for carbon contained in the additive for a hydraulic composition is preferably 1 to 1000 parts by mass, and more preferably 10 to 200 parts by mass, per 100 parts by mass of the flaky carbon, from the viewpoint of, for example, the effect of preventing aggregation of the flaky carbon, the effect of promoting dispersion, and the interaction with concrete via organic matter.

With conventional methods in which oxidation treatment and reduction treatment are performed, it is impossible to form a flaky carbon dispersion on a plastic substrate because, for example, the plastic substrate is hydrolyzed during the reduction treatment, and the flaky carbon aggregates and thus cannot be present as a dispersion when the reduction treatment is performed. However, in the present invention, a flaky carbon dispersion can be formed on a plastic substrate, such as polyethylene terephthalate (PET), without hydrolysis of the substrate by incorporating the organic compound containing a hydrophilic group and a hydrophobic group with a high affinity for carbon and performing the specific treatment.

### Pressure Treatment (High-pressure Dispersion Method)

When the high-pressure dispersion method is used in the present invention, it is preferable to subject a composition that contains the carbonaceous material having a layered structure and the organic compound containing a hydrophilic group and a hydrophobic group with a high affinity for carbon to pressure treatment at 30 MPa or more, as described above.

By the pressure treatment, pulverization of the carbonaceous material having a layered structure occurs, and, depending on the conditions, the graphene structure may not be maintained. However, the pressure treatment allows efficient flaking of the carbonaceous material having a layered structure, thus reducing the treatment time. When the pressure treatment is performed, the pressure level is not particularly limited as long as the carbonaceous material having a layered structure can be sufficiently flaked, and is preferably 30 MPa or more, more preferably 50 to 400 MPa, and even more preferably 100 to 300 MPa. The pressure treatment can be performed using, for example, a high-pressure dispersion device or a supercritical water preparation device. In a high-pressure dispersion device, mechanical pressure can be applied to allow dispersion. In a supercritical water preparation device, the pressure of the system can be increased by heating water.

By the pressure treatment, for example, the following treatments can be performed:
(i) two or more carbonaceous material dispersions described above are collided with each other;
(ii) a carbonaceous material dispersion described above is collided with a metal or a ceramic material (a material with high hardness, such as silicon carbide and alumina); and
(iii) a carbonaceous material dispersion described above is passed through a space with a cross-sectional area of 1 cm² or less.

According to (i) and (ii) above, the severity of the pressure conditions can be increased, the carbonaceous material having a layered structure can be more efficiently flaked, and the treatment time can be further reduced. According to (iii) above, the carbonaceous material having a layered structure can be more appropriately flaked while maintaining the graphene structure. The pressure operation can be performed one or more times, preferably 10 or more times.

The temperature at which pressure is applied is not particularly limited as long as the carbonaceous material having a layered structure can be sufficiently flaked. In the case of (i) and (ii) above, the temperature at which pressure is applied can be 0 to 100°C, in particular, 20 to 95°C. In the case of (iii) above, the temperature at which pressure is applied is preferably 0 to 100°C when pressure is mechanically applied, and the temperature at which pressure is applied is preferably 373 to 700°C, and more preferably 380 to 450°C when pressure is created by the supercritical state of water.

When the pressure treatment is performed, it is preferable to perform ultrasonic dispersion treatment as preliminary treatment (pre-treatment) to pulverize the carbonaceous material having a layered structure. Due to this, effects such as prevention of clogging can be obtained.

The output power when the ultrasonic dispersion treatment is performed is not particularly limited, and is preferably higher than that of ultrasonic dispersion treatment that is usually performed (about 40 to 50 W), from the viewpoint of flaking of the carbonaceous material having a layered structure. Specifically, the output power of the ultrasonic dispersion treatment is preferably 100 W or more, more preferably 300 to 20000 W or more, and even more preferably 400 to 18000 W.

The temperature at which ultrasonic dispersion is performed is not particularly limited as long as the carbonaceous material having a layered structure can be sufficiently flaked, and can be 0 to 80°C, in particular, 10 to 70°C. The ultrasonic dispersion time is not particularly limited as long as the carbonaceous material having a layered structure can be sufficiently flaked, and can be 1 to 600 minutes, in particular, 3 to 120 minutes.

Moreover, as pre-treatment or post-treatment for these treatments, dispersion treatment using another dispersion device, such as usual mechanical stirring, dispersion treatment using an emulsification device, or dispersion treatment using a bead mill, may be used in combination.

In the present invention, when graphite oxide is used as the carbonaceous material having a layered structure, it is present as an oxide of flaky carbon in the dispersion that has been subjected to the pressure treatment. Thus, when graphite oxide is used as the carbonaceous material having a layered structure, it is preferable to perform reduction treatment as post-treatment. Various methods, such as chemical reduction and electrochemical reduction, can be used as the reduction treatment, and chemical reduction is preferred. In particular, chemical reduction with a reducing agent, such as hydrazine or sodium borohydride, is preferred. The amount of the reducing agent is preferably 1 to 1000 parts by mass, more preferably 10 to 500 parts by mass, and even more preferably 50 to 300 parts by mass, per 100 parts by mass of the oxide of flaky carbon. In addition, when heating is performed at the time of reduction, reduction becomes easier. The heating temperature is preferably 40 to 200°C, more preferably 50 to 150°C, and even more preferably 60 to 120°C. The reduction time is preferably 10 minutes to 64 hours, more preferably 30 minutes to 48 hours, and even more preferably 1 to 24 hours. However, the reduction time is preferably set so that the graphene structure is not excessively destroyed.

### (2-3) Production Method for Additive for Hydraulic Composition of the Present Invention

The additive for a hydraulic composition of the present invention can be obtained by optionally removing the solvent from the flaky carbon dispersion described above.

The solvent removal can be performed, for example, by a method of concentrating the flaky carbon dispersion. In addition to drying the flaky carbon dispersion, the solvent removal can also be performed, for example, by a method of drying after spin coating or application of the flaky carbon dispersion to a substrate, or a method of collecting a thermally conductive material of the present invention by general-purpose solid-liquid separation. Examples of methods for performing solid-liquid separation include methods used for general-purpose solid-liquid separation, such as filtration with filter paper, glass filter, etc.; filtration after centrifugal separation; and use of a vacuum filtration device. The drying method is not limited. For example, drying may be performed at about 50 to 200°C for about 1 to 24 hours by using a hot-air dryer or the like.

In the present invention, one obtained by optionally removing the solvent from the flaky carbon dispersion described above can be used. If necessary, it is also possible to remove the organic compound containing a hydrophilic group and a hydrophobic group with a high affinity for carbon. After that, a chemical admixture described below can be added again to obtain the additive for a hydraulic composition of the present invention. Specifically, the water-soluble compound containing a hydrophobic group with a high affinity for carbon and a hydrophilic group can be removed by washing the flaky carbon composition with water, an organic solvent, or the like. Other than water and an organic solvent, the washing treatment can also be performed with dilute acid or dilute alkali to achieve removal. When the water-soluble compound containing a hydrophobic group with a high affinity for carbon and a hydrophilic group is an organic ammonium salt, heat treatment can also be used to remove the water-soluble compound containing a hydrophobic group with a high affinity for carbon and a hydrophilic group since organic ammonium salts are decomposed by heat treatment at 150 to 400°C, and preferably 200 to 350°C.

In conventional dispersants, it is thought that dispersant molecules and flaky carbon are adsorbed through hydrophobic interaction, and it is also thought that the adsorption power thereof is large since the molecular weight is relatively large. On the other hand, the water-soluble compound containing a hydrophobic group with a high affinity for carbon and a hydrophilic group for use in the present invention is not chemically bonded to flaky carbon, and the adsorption power thereof is also weaker than that of conventional products since the molecular weight is small. For this reason, the water-soluble compound for use in the present invention can be more easily removed from the flaky carbon composition, compared with conventional products, and is thus advantageous.

The washing for removing the water-soluble compound containing a hydrophobic group with a high affinity for carbon and a hydrophilic group can be performed by bringing the flaky carbon composition into contact with a washing liquid. For the washing liquid, it is possible to use water, various types of organic solvent, and the like as long as the water-soluble compound containing a hydrophobic group with a high affinity for carbon and a hydrophilic group can be dissolved. Examples of usable organic solvents include alcohols, such as methanol, ethanol, and isopropyl alcohol (IPA) (in particular, alcohols having 1 to 6 carbon atoms), acetone, N-methylpyrrolidone, and dimethylformamide. These may be used singly or in a combination of two or more.

Among these, preferred are organic solvents that evaporate in a short period of time from the flaky carbon composition after washing. Examples of the organic solvents include those having a boiling point under ordinary pressure of about 50 to 250°C, in particular, about 60 to 200°C, such as methanol, ethanol, acetone, N-methylpyrrolidone, and dimethylformamide.

The washing for removing the water-soluble compound containing a hydrophobic group with a high affinity for carbon and a hydrophilic group as described above may otherwise be performed by bringing the flaky carbon composition into contact with dilute acid or dilute alkali, followed by washing with water. The dilute acid is preferably 0.1 to 5% hydrochloric acid, and the dilute alkali is preferably 0.1 to 3% aqueous ammonia.

The washing operation may be performed by bringing the washing liquid and the flaky carbon composition into contact with each other. For example, it is preferred that the flaky carbon composition collected from the flaky carbon dispersion is gently immersed in the washing liquid at room temperature. The immersion time is preferably 30 minutes or less, and more preferably 20 minutes or less, to maintain the shape of flaky carbon composition.

The amount of the washing liquid for use is not limited and can be suitably selected from a wide range as long as the amount is effective for washing. Typically, excellent results are obtained by using the washing liquid in an amount of about 100 to 100000 parts by mass, in particular, about 1000 to 5000 parts by mass, per 100 parts by mass of the flaky carbon composition.

### 3. Hydraulic Composition

The hydraulic composition of the present invention comprises the additive for a hydraulic composition of the present invention described above. The configuration of the hydraulic composition of the present invention may be the same as the configuration of conventional hydraulic compositions, except for the additive for a hydraulic composition of the present invention.

Specifically, the hydraulic composition of the present invention preferably comprises the additive for a hydraulic composition of the present invention and a hydraulic component (e.g., hydraulic powder).

Examples of the hydraulic component (e.g., hydraulic powder) for use include, but are not limited to, cement, such as Portland cement and blended cement. These cements for use may be known products or commercially available products. These hydraulic components (e.g., hydraulic powder) may be used singly or in a combination of two or more.

In the hydraulic composition of the present invention, the content of the hydraulic component (e.g., hydraulic powder) is not limited and is preferably 200 to 2,000 kg/m³, and more preferably 240 to 1,500 kg/m³ per m³ of the hydraulic composition of the present invention from the viewpoint of, for example, fillability, fluidity, and strength after hardening.

In the hydraulic composition of the present invention, the content of the additive for a hydraulic composition of the present invention is preferably 0.01 to 10 parts by mass, and more preferably 0.03 to 1 part by mass per 100 parts by mass of the hydraulic component (e.g., hydraulic powder) from the viewpoint of, for example, fillability, fluidity, and strength after hardening.

In the hydraulic composition of the present invention, the content of water is preferably 5 to 80 parts by mass, and more preferably 10 to 70 parts by mass per 100 parts by mass of the hydraulic component (e.g., hydraulic powder) from the viewpoint of, for example, fillability, fluidity, and strength after hardening. When the additive for a hydraulic composition of the present invention comprises water, the amount of water added is preferably adjusted so that the total content of water is within the above range, including the content of water in the additive for a hydraulic composition of the present invention.

In addition to the additive for a hydraulic composition of the present invention and the hydraulic component (e.g., hydraulic powder) described above, the hydraulic composition of the present invention may further comprise aggregates (e.g., fine aggregates, such as silica sand, river sand, land sand, mountain sand, sea sand, blast furnace slag fine aggregates, stone powder, silica fume, fly ash, natural zeolite, synthetic zeolite, pumice, and kaolin; and coarse aggregates, such as river gravel, land gravel, mountain gravel, sea gravel, crushed stone, lime gravel, and blast furnace slag coarse aggregates) and water.

Since the additive for a hydraulic composition of the present invention comprises the organic compound containing a hydrophilic group and a hydrophobic group with a high affinity for carbon described above, the addition of a chemical admixture is not necessarily essential; however, a chemical admixture may further be added from the viewpoint of, for example, fillability and fluidity.

The chemical admixture for use is not limited and may be those that have been conventionally used in hydraulic compositions. For example, those mentioned for the organic compound containing a hydrophilic group and a hydrophobic group with a high affinity for carbon can be used. In this case, it is possible to use those that are of the same type as or a different type from the organic compound containing a hydrophilic group and a hydrophobic group with a high affinity for carbon contained in the additive for a hydraulic composition of the present invention.

The amount of the chemical admixture when used is suitably selected from the viewpoint of, for example, fillability, fluidity, and strength after hardening, to the extent that the effects of the present invention are not impaired, and is usually preferably 0.0005 to 10 parts by mass, and more preferably 0.001 to 6 parts by mass per 100 parts by mass of the hydraulic component (e.g., hydraulic powder).

In addition to the above, the hydraulic composition of the present invention may additionally comprise expanding agents, foaming agents, blowing agents, waterproofing agents, and the like, to the extent that the effects of the present invention are not impaired.

The production method for the hydraulic composition of the present invention does not differ from conventional methods except for the use of the additive for a hydraulic composition of the present invention, and the hydraulic composition of the present invention can be produced according to ordinary methods. The hardening method for the hydraulic composition of the present invention also does not differ from conventional methods, and hardening can be performed according to ordinary methods.

### Examples

The present invention is described in more detail below with reference to Examples. However, the present invention is not limited to the Examples.

Chemical admixtures are supplied in the form of aqueous solutions, and each product has a different concentration. Since the ratio between graphene and dispersant is typically discussed based on the mass ratio between solid substances, the concentrations were measured. The following shows the results.
MasterPozzolith No. 70 (produced by BASF Japan Ltd.; a complex of lignin sulfonic acid and polyol): 40.21 mass%
MasterPolyheed 15S (produced by BASF Japan Ltd.; a complex of lignin sulfonic acid and polycarboxylic acid ether): 16.37 mass%
MasterGlenium SP8SB (produced by BASF Japan Ltd.; a complex of a polycarboxylate ether-based compound and an intramolecular crosslinked polymer): 17.92 mass%
MasterGlenium SP8SV (produced by BASF Japan Ltd.; a polycarboxylate ether-based compound): 17.81 mass%
MasterEase 3030 (produced by BASF Japan Ltd.; a PAE compound): 23.21 mass%
Mighty 3000S (produced by Kao Corporation; a polyether-based polycarboxylic acid compound): 20.96 mass%
Mighty 3000H (produced by Kao Corporation; a polyether-based polycarboxylic acid compound): 24.47 mass%

### Example 1: Dispersibility of Flaky Carbon Dispersion Liquid

### Example 1-1

500 g of natural graphite (produced by Ito Graphite Co., Ltd.), 250 g of polyoxyethylene naphthalyl ether (molecular weight: 1200 to 1300), and 9250 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

40 g of the obtained flaky carbon dispersion liquid (containing 2 g of flaky carbon) was filtered under reduced pressure, and water was added to the obtained cake to adjust the amount to 100 g. This operation was repeated three times to produce 100 g of a dispersion liquid containing 2 g of flaky carbon.

To this flaky carbon dispersion liquid, 12 g of an aqueous solution of MasterPozzolith No. 70 (produced by BASF Japan Ltd.) was added, and the mixture was subjected to dispersion treatment for 1 minute using a 600-W ultrasonic dispersion device to produce a flaky carbon dispersion liquid having the composition shown in Table 1.

### Example 1-2

A flaky carbon dispersion liquid having the composition shown in Table 1 was produced in the same manner as in Example 1-1, except that 12 g of MasterPolyheed 15S (produced by BASF Japan Ltd.) was added to the obtained flaky carbon dispersion liquid instead of MasterPozzolith No. 70 (produced by BASF Japan Ltd.).

### Example 1-3

A flaky carbon dispersion liquid having the composition shown in Table 1 was produced in the same manner as in Example 1-1, except that 12 g of MasterPozzolith No. 70 (produced by BASF Japan Ltd.) was diluted with 24 g of water and added to the obtained flaky carbon dispersion liquid. In this manner, the solid concentration of the chemical admixture was adjusted to about the same level as in Example 2.

### Example 1-4

A flaky carbon dispersion liquid of 0.2 g of flaky carbon, 9.8 g of water, and 1.2 g of MasterPozzolith No. 70 (produced by BASF Japan Ltd.) was collected from the flaky carbon dispersion liquid obtained in Example 1-1, and 30 g of water and 3.6 g of MasterPozzolith No. 70 (produced by BASF Japan Ltd.) were added thereto to produce a flaky carbon dispersion liquid having the composition shown in Table 1. This composition corresponds to 125 g of flaky carbon per m³ of concrete in the tests described below.

### Example 1-5

A dispersion liquid of 0.2 g of flaky carbon, 9.8 g of water, and 1.2 g of MasterPolyheed 15S (produced by BASF Japan Ltd.) was collected from the flaky carbon dispersion liquid obtained in Example 1-2, and 30 g of water and 3.6 g of MasterPolyheed 15S (produced by BASF Japan Ltd.) were added thereto to produce a flaky carbon dispersion liquid having the composition shown in Table 1. This composition corresponds to 125 g of flaky carbon per m³ of concrete in the tests described below.

### Example 1-6

A flaky carbon dispersion liquid having the composition shown in Table 1 was produced by diluting the dispersion liquid obtained in Example 1-4 with water so that the concentration of flaky carbon in water was 0.005 mass%. This Example was performed in view of cases in previous reports in which dispersibility improved when the concentration in water was below 0.01 mass%.

### Test Example 1: Dispersibility

After the dispersion liquids obtained in Examples 1 to 6 were allowed to stand, dispersibility was evaluated according to the following criteria by visually observing, for example, the presence or absence of the precipitation state.
A: Dispersion was maintained even 10 minutes after the completion of the dispersion treatment.
B: Suspended matter was generated immediately after the completion of the dispersion treatment.

Table 1 shows the results. The results revealed that Examples 1-1 to 1-6 all achieved excellent dispersibility, and that Examples 1-1, 1-3, and 1-4, in particular, achieved superior dispersibility.

**Table 1**

| | | Example | | | | | |
|---|---|---|---|---|---|---|---|
| | | 1-1 | 1-2 | 1-3 | 1-4 | 1-5 | 1-6 |
| Flaky carbon (g) | | 2 | 2 | 2 | 0.2 | 0.2 | 0.2 |
| Water (g) | | 98 | 98 | 112 | 39.8 | 39.8 | 4000 |

| Chemical admixture | | | | | | | |
|---|---|---|---|---|---|---|---|
| | MP70 (g) | 12 | - | 12 | 4.8 | - | - |
| | MP15S (g) | - | 12 | - | - | 4.8 | 4.8 |
| Dispersibility | | A | A | A | A | A | A |

### Example 2: Mortar (Part 1)

### Example 2-1

1000 g of natural graphite (produced by Ito Graphite Co., Ltd.), 100 g of polyoxyethylene naphthalyl ether (molecular weight: 1200 to 1300), and 18900 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

Below, a mortar having a composition based on the mix proportion of the mortar (450 g of cement, 1350 g of standard sand, and 225 g of water) used in the "11 Strength test" section in the "Physical testing methods for cement" in JIS R 5201 was produced.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.), 22.75 g of the obtained flaky carbon dispersion liquid, 4.4 g of MasterPolyheed 15S (produced by BASF Japan Ltd.), and 218.58 g of water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 2, which was then molded in a mold.

In this Example, 0.73 g of flaky carbon was contained. This was calculated based on the assumption that 500 g of solid flaky carbon is introduced into the mix proportion of 24-12-20N with a design strength of 24 N/mm², in which the cement content is 307 kg/m³ of concrete, and in view of the fact that the cement content in the mix proportion of the mortar of this Example was 450 g.

The solid content of MasterPolyheed 15S (4.40 g) was calculated based on the assumption that 3 kg of the chemical admixture per m³ of concrete is introduced into the above mix proportion of concrete.

### Example 2-2

500 g of natural graphite (produced by Ito Graphite Co., Ltd.), 250 g of polyoxyethylene naphthalyl ether (molecular weight: 1200 to 1300), and 9250 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

Below, a mortar having a composition based on the mix proportion of the mortar (450 g of cement, 1350 g of standard sand, and 225 g of water) used in the "11 Strength test" section in the "Physical testing methods for cement" in JIS R 5201 was produced.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.), 12.46 g of the obtained flaky carbon dispersion liquid, 4.4 g of MasterPolyheed 15S (produced by BASF Japan Ltd.), and 208.87 g of water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 2, which was then molded in a mold.

In this Example, 0.73 g of flaky carbon was contained. This was calculated based on the assumption that 500 g of solid flaky carbon is introduced into the mix proportion of 24-12-20N with a design strength of 24 N/mm², in which the cement content is 307 kg/m³ of concrete, and in view of the fact that the cement content in the mix proportion of the mortar of this Example was 450 g.

The solid content of MasterPolyheed 15S (4.40 g) was calculated based on the assumption that 3 kg of the chemical admixture per m³ of concrete is introduced into the above mix proportion of concrete.

### Example 2-3

80 g of natural graphite (produced by Ito Graphite Co., Ltd.), 480 g of MasterPolyheed 15S (produced by BASF Japan Ltd.), and 3440 g of water were mixed and stirred to obtain a liquid mixture. The liquid mixture was subjected to shear treatment twice at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

10 g of the obtained dispersion liquid was diluted 10-fold with water and filtered. The cake obtained by filtration was further dispersed in 100 g of water, filtered under reduced pressure, and washed with a splash of water. This process was repeated three times to perform washing. The obtained filtrate was dried at 150°C to obtain a black solid.

Analysis of the obtained solid by TG-DTA (thermogravimetric analysis) revealed that the weight loss at 100 to 450°C was 5.36% with elimination of the effect of adsorbed water, indicating adsorption of a large amount of organic matter.

Below, a mortar having a composition based on the mix proportion of the mortar (450 g of cement, 1350 g of standard sand, and 225 g of water) used in the "11 Strength test" section in the "Physical testing methods for cement" in JIS R 5201 was produced.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.), 46.42 g of the obtained flaky carbon dispersion liquid, and 179.31 g of water were kneaded at low speed for 30 seconds (rotation speed: 140±5 rotations per minute, revolution speed: 6215 revolutions per minute). Next, kneading was performed at low speed for 30 seconds (rotation speed: 140±5 rotations per minute, revolution speed: 62±5 revolutions per minute) while adding 1350 g of sand (JIS standard sand) as a fine aggregate. Next, kneading was performed at high speed for 30 seconds (rotation speed: 140±5 rotations per minute, revolution speed: 62±5 revolutions per minute). The mixer was then stopped, and the resulting product was scraped off for 30 seconds and allowed to stand for 60 seconds. Kneading was then further performed at high speed for 60 seconds (rotation speed: 140±5 rotations per minute, revolution speed: 62±5 revolutions per minute), and the resulting product was stirred 10 times with a spoon to produce a mortar having the composition shown in Table 2, which was then molded in a mold.

In this Example, 0.73 g of flaky carbon was contained. This was calculated based on the assumption that 500 g of solid flaky carbon is introduced into the mix proportion of 24-12-20N with a design strength of 24 N/mm², in which the cement content is 307 kg/m³ of concrete, and in view of the fact that the cement content was 450 g.

The solid content of MasterPolyheed 15S (4.38 g) was calculated based on the assumption that 3 kg of the chemical admixture per m³ of concrete is introduced into the above mix proportion of concrete.

### Test Example 2: Fresh Properties of Mortar

One day after the production, the mortars obtained in Examples 2-1 to 2-3 were demolded from the mold, and the setting and hardening state was visually observed. The results showed no abnormality in any of Examples 2-1 to 2-3.

### Test Example 3: Change in Slump Flow with Time

Two batches of each of the mortars of Examples 2-1 to 2-3 were produced and combined into a single sample for each of Examples 2-1 to 2-3. Thereafter, the measurement of flow was performed by hitting 5 times in accordance with the "Physical testing methods for cement" (JIS R 5201). Table 2 shows the results.

**Table 2**

| | | Example | | |
|---|---|---|---|---|
| | | 2-1 | 2-2 | 2-3 |
| Cement (g) | | 450 | 450 | 450 |
| Sand (g) | | 1350 | 1350 | 1350 |
| Flaky carbon (g) | | 0.73 | 0.73 | 0.73 |
| Dispersant (g) | | 0.073 | 0.365 | - |

| Chemical admixture | | | | |
|---|---|---|---|---|
| | MP15S (g) | 4.40 | 12 | - |
| Water (g) | | 220.53 | 220.24 | 220.62 |
| Total (g) | | 225.73 | 225.73 | 225.73 |
| Fresh properties of mortar | | No abnormality | No abnormality | No abnormality |

| Flow after hitting 5 times | | | | |
|---|---|---|---|---|
| | Immediately after kneading (mm) | 188 | 192 | 191 |
| | After 30 min (mm) | 190 | 191 | 189 |
| Flow loss (mm) | | -2 | 1 | 2 |

### Example 3: Concrete

### Comparative Example 3-1

The mix proportion of base concrete to achieve a design strength of about 24 N/mm² was determined to be, per m³ of concrete, 305 kg/m³ of ordinary Portland cement (produced by Sumitomo Osaka Cement Co., Ltd.), 997 kg/m³ of crushed stone from Nishijima as a coarse aggregate, 569 kg/m³ of river sand from the Ibi river as a fine aggregate, 246 kg/m³ of crushed sand from Ibaraki as a fine aggregate, 3.0 kg/m³ of MasterPolyheed 15S (produced by BASF Japan Ltd.) as a chemical admixture, and 168 kg/m³ of water, and such that the water/cement ratio (W/C) was 55 mass%, the fine aggregate rate (s/a) was 45.0%, the target slump was 12 cm, and the target air content was 4.5 mass%. Based on this mix proportion, concrete was prepared such that the kneading amount of concrete was 35 L as follows.

5.775 kg of water and 0.105 kg of MasterPolyheed 15S (produced by BASF Japan Ltd.) as a chemical admixture were mixed to obtain kneading water.

Subsequently, 34.895 kg of crushed stone from Nishijima was introduced as a coarse aggregate, 19.915 kg of river sand from the Ibi river was introduced as a fine aggregate, 10.675 kg of ordinary Portland cement (produced by Sumitomo Osaka Cement Co., Ltd.) was introduced, and 8.610 kg of crushed sand from Ibaraki was introduced as a fine aggregate. The mixture was kneaded without water for 10 seconds in a forced twin-shaft mixer (KBHS-50R, produced by KYC Machine Industry Co., Ltd., shaft rotation speed: 44 rpm). Next, the obtained kneading water was introduced thereto, and the mixture was kneaded for 90 seconds to thus produce concrete of Comparative Example 3-1.

### Example 3-1

750 g of natural graphite (produced by Ito Graphite Co., Ltd.), 375 g of polyoxyethylene naphthalyl ether (molecular weight: 1200 to 1300), and 13875 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

Concrete of Example 3-1 was produced in the same manner as in Comparative Example 3-1, except that 0.2418 kg of the obtained flaky carbon dispersion liquid was added and the amount of water was adjusted in the production of the kneading water. The amount of flaky carbon added was thus 350 g/m³ of concrete.

### Example 3-2

750 g of natural graphite (produced by Ito Graphite Co., Ltd.), 375 g of polyoxyethylene naphthalyl ether (molecular weight: 1200 to 1300), and 13875 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

Concrete of Example 3-2 was produced in the same manner as in Comparative Example 3-1, except that 0.2356 kg of the obtained flaky carbon dispersion liquid was added and the amount of water was adjusted in the production of the kneading water. The amount of flaky carbon added was thus 350 g/m³ of concrete.

### Example 3-3

Concrete of Example 3-3 was produced in the same manner as in Comparative Example 3-1, except that 0.4836 kg of the flaky carbon dispersion liquid obtained in Example 3-1 was added and the amount of water was adjusted in the production of the kneading water. The amount of flaky carbon added was thus 700 g/m³ of concrete.

### Example 3-4

Concrete of Example 3-4 was produced in the same manner as in Comparative Example 3-1, except that 0.4712 kg of the flaky carbon dispersion liquid obtained in Example 3-2 was added and the amount of water was adjusted in the production of the kneading water. The amount of flaky carbon added was thus 700 g/m³ of concrete.

**Table 3**

| | | Comparative Example | Example | | | |
|---|---|---|---|---|---|---|
| | | 3-1 | 3-1 | 3-2 | 3-3 | 3-4 |
| Cement (kg) | | 10.675 | 10.675 | 10.675 | 10.675 | 10.675 |
| Coarse aggregate (kg) | | 34.895 | 34.895 | 34.895 | 34.895 | 34.895 |
| Fine aggregate 1 (kg) | | 19.915 | 19.915 | 19.915 | 19.915 | 19.915 |
| Fine aggregate 2 (kg) | | 8.610 | 8.610 | 8.610 | 8.610 | 8.610 |
| Flaky carbon dispersion liquid (kg) | | - | 0.2418 | 0.2356 | 0.4836 | 0.4712 |

| Chemical admixture | | | | | | |
|---|---|---|---|---|---|---|
| | MP15S (g) | 0.105 | 0.105 | 0.105 | 0.105 | 0.105 |
| Water (g) | | 5.775 | 5.545 | 5.552 | 5.316 | 5.328 |
| Kneading amount (L) | | 35 | 35 | 35 | 35 | 35 |

### Test Example 5: Fresh Properties of Concrete

The slump of concrete obtained in Examples 3-1 to 3-4 and Comparative Example 3-1 was measured after the completion of kneading, 30 minutes after water injection, and 60 minutes after water injection, in accordance with JIS A 1101. The air content was measured after the completion of kneading in accordance with JIS A 1128. Additionally, the concrete temperature (room temperature: 20°C) was also measured at the time of the measurement of slump. Table 4 shows the results.

**Table 4**

| | | Comparative Example | Example | | | |
|---|---|---|---|---|---|---|
| | | 3-1 | 3-1 | 3-2 | 3-3 | 3-4 |
| Temperature | | | | | | |
| | After 0 min (°C) | 21.5 | 22.2 | 21.3 | 22.3 | 21.6 |
| | After 30 min (°C) | 22.2 | 22.6 | 22.0 | 22.8 | 22.1 |
| | After 60 min (°C) | 22.1 | 22.6 | 22.0 | 23.0 | 22.1 |

| Slump | | | | | | |
|---|---|---|---|---|---|---|
| | After 0 min (mm) | 16.0 | 8.2 | 7.0 | 4.8 | 4.8 |
| | After 30 min (mm) | 6.4 | 4.4 | 4.4 | 3.3 | 4.4 |
| | After 60 min (mm) | 5.3 | 5.0 | 3.5 | 2.7 | 2.7 |

| Air content | | | | | | |
|---|---|---|---|---|---|---|
| | After 0 min (vol%) | 4.0 | 2.8 | 3.5 | 2.6 | 2.8 |

### Test Example 6: Test for Compressive Strength and Test for Static Modulus of Elasticity

After the completion of kneading, 12 test pieces were produced for each mix proportion using a steel formwork (diameter: 100 mm × 200 mm). On the next day, all of the test pieces were demolded, and underwater curing was performed at 20°C until the predetermined material age. The setting and hardening state was observed at the time of demolding (material age: 1 day) as in Test Example 2, which confirmed no abnormalities in any of the test pieces.

At three material ages (7 days, 28 days, and 91 days), a test for compressive strength was conducted in accordance with JIS A 1108, and a test for static modulus of elasticity was conducted in accordance with JIS A 1149. At the material age of 14 days, only the test for compressive strength was conducted.

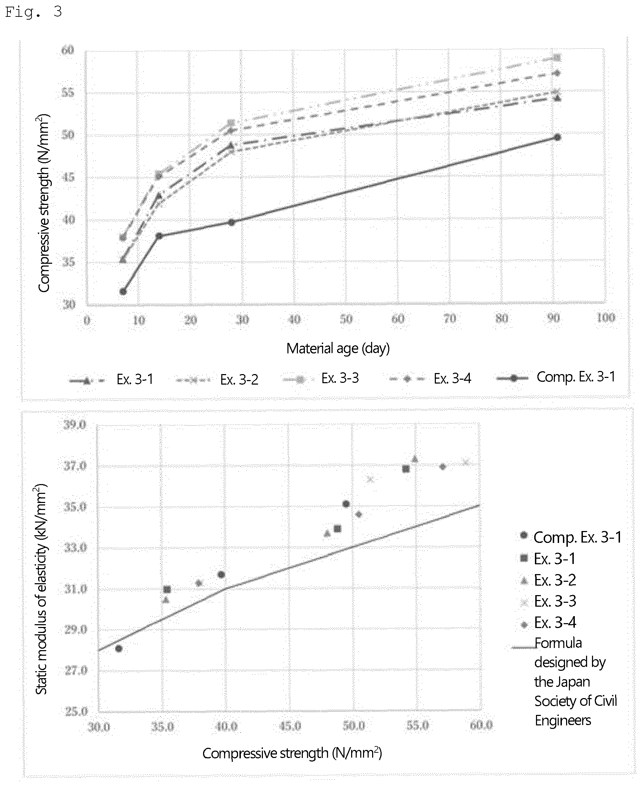

Fig. 3 shows the results. The results revealed that an increase in the amount of flaky carbon added improved the compressive strength as compared with the base concrete, showing a 29.5% increase in strength at maximum at the material age of 28 days.

### Example 4: Mortar (Part 2)

### Comparative Example 4-1

4.40 g of MasterPolyheed 15S (produced by BASF Japan Ltd.) and 220.6 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Example 4-1

500 g of natural graphite (produced by Ito Graphite Co., Ltd.), 250 g of carboxymethylcellulose sodium salt (produced by Sigma-Aldrich), and 9250 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

26.906 g of the obtained flaky carbon dispersion liquid, 4.4 g of MasterPolyheed 15S (produced by BASF Japan Ltd.), and 195.2 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.6 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Example 4-2

500 g of natural graphite (produced by Ito Graphite Co., Ltd.), 1428 g of MasterPolyheed 15S (produced by BASF Japan Ltd.), and 8070 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

27.237 g of the obtained flaky carbon dispersion liquid, 1.44 g of MasterPolyheed 15S (produced by BASF Japan Ltd.), and 197.36 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute).
Next, kneading was performed at low speed for 30 seconds (rotation speed: 140±5 rotations per minute, revolution speed: 6215 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Example 4-3

500 g of natural graphite (produced by Ito Graphite Co., Ltd.), 1428 g of MasterPolyheed 15S (produced by BASF Japan Ltd.), and 8070 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

25.704 g of the obtained flaky carbon dispersion liquid, 1.44 g of MasterPolyheed 15S, and 198.89 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Example 4-4

500 g of natural graphite (produced by Ito Graphite Co., Ltd.), 2857 g of MasterPolyheed 15S (produced by BASF Japan Ltd.), and 8070 g of water were mixed and stirred to obtain a liquid mixture. The liquid mixture was subjected to shear treatment once at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

30.194 g of the obtained flaky carbon dispersion liquid and 195.9 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the compopsition shown in Table 5, which was then molded in a mold.

### Example 4-5

500 g of natural graphite (produced by Ito Graphite Co., Ltd.), 2125 g of MasterPolyheed 15S (produced by BASF Japan Ltd.), and 8070 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

27.146 g of the obtained flaky carbon dispersion liquid and 198.9 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Test Example 7: Flow Test for Mortar

Two batches of each of the mortars of Comparative Example 4-1 and Examples 4-1 to 4-5 were produced and combined into a single sample for each of Comparative Example 4-1 and Examples 4-1 to 4-5. Thereafter, the measurement of flow was performed by hitting 15 times in accordance with the "Physical testing methods for cement" (JIS R 5201). Table 5 shows the results.

### Test Example 8: Air Content of Mortar

After two batches of each of the mortars were produced and combined into a single sample for each of Comparative Example 4-1 and Examples 4-1 to 4-5, the air content was measured after the completion of kneading in accordance with the "Test methods for polymer-modified mortar" (JIS A 1171). Table 5 shows the results.

**Table 5**

| | | Comparative Example | Example | | | | |
|---|---|---|---|---|---|---|---|
| | | 4-1 | 4-1 | 4-2 | 4-3 | 4-4 | 4-5 |
| Cement (g) | | 450 | 450 | 450 | 450 | 450 | 450 |
| Sand (g) | | 1350 | 1350 | 1350 | 1350 | 1350 | 1350 |

| Dispersion liquid | | | | | | | |
|---|---|---|---|---|---|---|---|
| | Flaky carbon (g) | - | 1.035 | 1.035 | 1.035 | 1.035 | 1.035 |
| | CMC-Na (g) | - | 0.518 | - | - | - | - |
| | MP15S (g) | - | - | 2.957 | 2.957 | 5.914 | 4.400 |
| | Water (g) | - | 25.354 | 23.245 | 21.712 | 23.245 | 21.711 |
| | Total (g) | - | 26.906 | 27.237 | 25.704 | 30.194 | 27.146 |

| Chemical admixture | | | | | | | |
|---|---|---|---|---|---|---|---|
| | MP15S (g) | 4.4 | 4.4 | 1.44 | 1.44 | - | - |
| Water (g) | | 181.0 | 195.2 | 197.4 | 198.9 | 195.9 | 198.9 |
| Mortar temperature (°C) | | 22.6 | 22.8 | 22.5 | 22.4 | 22.6 | 22.9 |
| Air content (%) | | 11.1 | 9.6 | 11.7 | 9.6 | 11.5 | 9.9 |
| Flow (mm) | | 237 | 221 | 233 | 234 | 233 | 233 |

### Test Example 9: Test for Compressive Strength

When the flow value of mortar was within the range of 240±40 mm and the air content was within the range of 10.5±1.5%, nine test pieces were produced for each mix proportion using a simple steel formwork (diameter: 50 mm × 100 mm).

In the production of the test pieces, two separate layers of mortar were inserted in a formwork, and each layer was poked eight times with a poking stick for molding. Subsequently, the weights of the test pieces after molding were measured one by one to confirm that the weight was 370 g or more as the standard value (excluding the weight of the formwork).

The test pieces after molding were allowed to stand for 24 hours in a laboratory at 20±2°C, and test pieces with no abnormalities, such as hardening defects, were then directly demolded. Some were allowed to stand for another 24 hours before demolding. The demolded test pieces were placed in a water tank at 20±1°C, and underwater curing was performed until the predetermined material age.

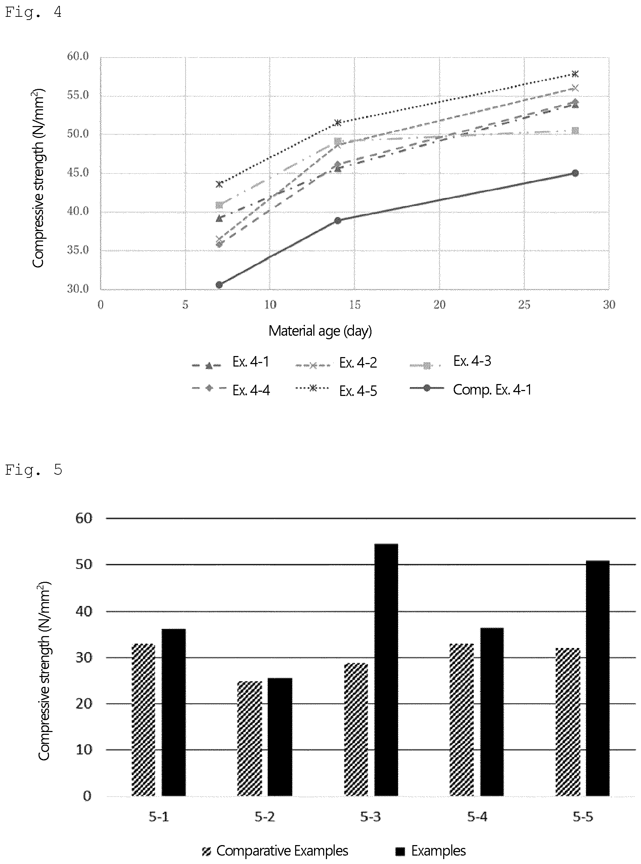

At the material ages of 7 days, 14 days, and 28 days, the end surfaces of the test pieces were polished, the sizes and weights were measured, and a test for compressive strength was then conducted in accordance with JIS A 1108. Fig. 4 shows the results.

The results revealed that the addition of the flaky carbon dispersion liquid improved the compressive strength as compared with the base concrete, showing a 28.4% increase in strength at maximum at the material age of 28 days.

### Example 5: Mortar (Part 3)

### Comparative Example 5-1

12.375 g of MasterGlenium SP8SB (produced by BASF Japan Ltd.) and 212.625 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Example 5-1

250 g of natural graphite (produced by Fuji Graphite Works Co., Ltd.), 2989 g of MasterGlenium SP8SB (produced by BASF Japan Ltd.), and 1761 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

45.2 g of the resulting flaky carbon dispersion liquid and 180.86 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 5, which was then molded in a mold.

### Comparative Example 5-2

7.875 g of MasterEase 3030 (produced by BASF Japan Ltd.) and 217.125 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Example 5-2

250 g of natural graphite (produced by Fuji Graphite Works Co., Ltd.), 1902 g of MasterEase 3030 (produced by BASF Japan Ltd.), and 2848 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

35.3 g of the obtained flaky carbon dispersion liquid and 190.69 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Comparative Example 5-3

5.625 g of Mighty 3000S (produced by Kao Corporation) and 219.375 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Example 5-3

250 g of natural graphite (produced by Fuji Graphite Works Co., Ltd.), 1359 g of Mighty 3000S (produced by Kao Corporation), and 3391 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

41.0 g of the resulting flaky carbon dispersion liquid and 185.04 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed a high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Comparative Example 5-4

7.875 g of Mighty 3000H (produced by Kao Corporation) and 217.125 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Example 5-4

250 g of natural graphite (produced by Fuji Graphite Works Co., Ltd.), 1902 g of Mighty 3000H (produced by Kao Corporation), and 2848 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

30.9 g of the obtained flaky carbon dispersion liquid and 195.18 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Comparative Example 5-5

4.725 g of MasterPolyheed 15S (produced by BASF Japan Ltd.) and 220.275 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Example 5-5

250 g of natural graphite (produced by Fuji Graphite Works Co., Ltd.), 1141 g of MasterPolyheed 15S (produced by BASF Japan Ltd.), and 3609 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 25 µm.

36.9 g of the obtained flaky carbon dispersion liquid and 189.12 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 6, which was then molded in a mold.

### Test Example 10: Flow Test for Mortar

Two batches of each of the mortars of Comparative Examples 5-1 to 5-5 and Examples 5-1 to 5-5 were produced and combined into a single sample for each of Comparative Examples 5-1 to 5-5 and Examples 5-1 to 5-5. Thereafter, the measurement of flow was performed by hitting 15 times in accordance with the "Physical testing methods for cement" (JIS R 5201). Table 6 shows the results.

**Table 6**

| | | Comparative Example | | | | | Example | | | | |
|---|---|---|---|---|---|---|---|---|---|---|---|
| | | 5-1 | 5-2 | 5-3 | 5-4 | 5-5 | 5-1 | 5-2 | 5-3 | 5-4 | 5-5 |
| Cement (g) | | 450 | 450 | 450 | 450 | 450 | 450 | 450 | 450 | 450 | 450 |
| Sand (g) | | 1350 | 1350 | 1350 | 1350 | 1350 | 1350 | 1350 | 1350 | 1350 | 1350 |

| Dispersion liquid | | | | | | | | | | | |
|---|---|---|---|---|---|---|---|---|---|---|---|
| | Flaky carbon (g) | - | - | - | - | - | 1.035 | 1.035 | 1.035 | 1.035 | 1.035 |
| | Chemical admixture (g) | - | - | - | - | - | 12.375 | 7.875 | 5.625 | 7.875 | 4.725 |
| | Water (g) | - | - | - | - | - | 31.77 | 26.43 | 34.34 | 21.94 | 27.13 |
| | Total (g) | - | - | - | - | - | 45.2 | 35.3 | 41.0 | 30.9 | 32.9 |
| Chemical admixture (g) | | 12.38 | 7.88 | 5.63 | 7.88 | 4.73 | - | - | - | - | - |
| Water (g) | | 212.72 | 217.22 | 219.47 | 217.22 | 220.37 | 180.9 | 190.7 | 185.0 | 195.2 | 189.1 |
| Mortar temperature (°C) | | 20.6 | 21.1 | 21.5 | 21.4 | 21.6 | 20.7 | 21 | 21.4 | 21.4 | 21.5 |
| Flow (mm) | | 232 | 242 | 238 | 250 | 191 | 213 | 235 | 212 | 236 | 187 |

### Test Example 11: Test for Compressive Strength

When the flow value of mortar was within the range of ±40 mm of the flow value of the Comparative Examples, three test pieces were produced for each mix proportion using a simple steel formwork (diameter: 50 mm × 100 mm). Example 5-1 was compared with Comparative Example 5-1, Example 5-2 with Comparative Example 5-2, Example 5-3 with Comparative Example 5-3, Example 5 -4 with Comparative Example 5-4, and Example 5-5 with Comparative Example 5-5.

In the production of the test pieces, two separate layers of mortar were inserted in a formwork, and each layer was poked eight times with a poking stick for molding. Subsequently, the weights of the test pieces after molding were measured one by one to confirm that the weight was 370 g or more as the standard value (excluding the weight of the formwork).

The test pieces after molding were allowed to stand in a laboratory at 20±2°C, and at the material age of 7 days, the test pieces were demolded after being confirmed to have no hardening defects. The demolded test pieces were placed in a water tank at 20±1°C, and underwater curing was performed until the predetermined material age.

At the material age of 28 days, the end surfaces of the test pieces were polished, the sizes and weights were measured, and a test for compressive strength was then conducted in accordance with JIS A 1108. Fig. 5 shows the results.

The results revealed that the addition of the flaky carbon dispersion liquid improved the compressive strength as compared with the base concrete, showing an 89.9% increase in strength at maximum at the material age of 28 days.

### Comparative Example 6-1

7.875 g of MasterGlenium SP8SV (produced by BASF Japan Ltd.) and 217.125 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Example 6-1

250 g of natural graphite (produced by Ito Graphite Co., Ltd.), 1902 g of MasterGlenium SP8SV (produced by BASF Japan Ltd.), and 2848 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

34.8 g of the obtained flaky carbon dispersion liquid and 191.21 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Comparative Example 6-2

12.375 g of MasterGlenium SP8SB (produced by BASF Japan Ltd.) and 212.625 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Example 6-2

250 g of natural graphite (produced by Ito Graphite Co., Ltd.), 2989 g of MasterGlenium SP8SB (produced by BASF Japan Ltd.), and 1761 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 15 µm.

37.0 g of the obtained flaky carbon dispersion liquid and 189.07 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Comparative Example 6-3

5.625 g of Mighty 3000S (produced by Kao Corporation) and 219.375 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Example 6-3

250 g of natural graphite (produced by Ito Graphite Co., Ltd.), 1359 g of Mighty 3000S (produced by Kao Corporation), and 3391 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 25 µm.

28.0 g of the obtained flaky carbon dispersion liquid and 198.01 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Comparative Example 6-4

4.725 g of MasterPolyheed 15S (produced by BASF Japan Ltd.) and 220.275 g of water were mixed to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 225.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Example 6-4

250 g of natural graphite (produced by Ito Graphite Co., Ltd.), 1141 g of MasterPolyheed 15S (produced by BASF Japan Ltd.), and 3609 g of water were mixed and stirred to obtain a liquid mixture. The liquid mixture was subjected to shear treatment 5 times at 1700 rpm using a ceramic grinder with a radius of 300 mm. The shortest distance in the ceramic grinder was about 10 µm.

The resulting dispersion liquid was applied to a silicon wafer and observed with a scanning electron microscope (SEM), which revealed that flaky carbon was obtained. The flaky carbon had a flake size of 1 to 20 µm.

37.0 g of the obtained flaky carbon dispersion liquid and 189.07 g of water were added to obtain kneading water.

In accordance with the kneading method described in the "Physical testing methods for cement" in JIS R 5201, and using a mixer (N50, produced by Hobart Corporation), 450 g of ordinary Portland cement (produced by Sumitomo Osaka Cement Co., Ltd.) and 226.0 g of the obtained kneading water were kneaded at low speed for 30 seconds (rotation speed: 140±5 rotations per minute, revolution speed: 62±5 revolutions per minute). Next, kneading was performed at low speed for 30 seconds (rotation speed: 140±5 rotations per minute, revolution speed: 62±5 revolutions per minute) while adding 1350 g of sand (type 1; JIS standard sand) as a fine aggregate. Next, kneading was performed at high speed for 30 seconds (rotation speed: 285±10 rotations per minute, revolution speed: 125±10 revolutions per minute). The mixer was then stopped, and the resulting product was scraped off for 30 seconds and allowed to stand for 60 seconds. Kneading was then further performed at high speed for 60 seconds (rotation speed: 285±10 rotations per minute, revolution speed: 125±10 revolutions per minute), and the resulting product was stirred 10 times with a spoon to produce a mortar having the composition shown in Table 7, which was then molded in a mold.

### Test Example 12: Flow Test for Mortar

Two batches of each of the mortars of Comparative Examples 6-1 to 6-5 and Examples 6-1 to 6-5 were produced and combined into a single sample for each of Comparative Examples 6-1 to 6-5 and Examples 6-1 to 6-5. Thereafter, the measurement of flow was performed by hitting 15 times in accordance with the "Physical testing methods for cement" (JIS R 5201). Table 7 shows the results.

**Table 7**

| | | Comparative Example | | | | | Example | | | | |
|---|---|---|---|---|---|---|---|---|---|---|---|
| | | 6-1 | 6-2 | 6-3 | 6-4 | 6-5 | 6-1 | 6-2 | 6-3 | 6-4 | 6-5 |
| Cement (g) | | 450 | 450 | 450 | 450 | 450 | 450 | 450 | 450 | 450 | 450 |
| Sand (g) | | 1350 | 1350 | 1350 | 1350 | 1350 | 1350 | 1350 | 1350 | 1350 | 1350 |

| Dispersion liquid | | | | | | | | | | | |
|---|---|---|---|---|---|---|---|---|---|---|---|
| | Flaky carbon (g) | - | - | - | - | - | 1.035 | 1.035 | 1.035 | 1.035 | 1.035 |
| | Chemical admixture (g) | - | - | - | - | - | 7.875 | 12.375 | 5.625 | 7.875 | 4.725 |
| | Water (g) | - | - | - | - | - | 25.91 | 23.55 | 21.37 | 22.60 | 27.13 |
| | Total (g) | - | - | - | - | - | 34.8 | 37.0 | 28.0 | 31.5 | 32.9 |
| Chemical admixture (g) | | 12.38 | 7.88 | 5.63 | 7.88 | 4.73 | - | - | - | - | - |
| Water (g) | | 212.72 | 217.22 | 219.47 | 217.22 | 220.37 | 191.2 | 1889.1 | 198.0 | 194.5 | 193.1 |
| Mortar temperature (°C) | | 20.6 | 21.1 | 21.5 | 21.4 | 21.6 | 20.3 | 20.8 | 21.4 | 20.2 | 21.7 |
| Flow (mm) | | 232 | 242 | 238 | 250 | 191 | 211 | 203 | 221 | 226 | 183 |

### Test Example 13: Test for Compressive Strength

When the flow value of mortar was within the range of ±40 mm of the flow value of the Comparative Examples, three test pieces were produced for each mix proportion using a simple steel formwork (diameter: 50 mm × 100 mm). Example 6-1 was compared with Comparative Example 6-1, Example 6-2 with Comparative Example 6-2, Example 6-3 with Comparative Example 6-3, Example 6 -4 with Comparative Example 6-4, and Example 6-5 with Comparative Example 6-5.

In the production of the test pieces, two separate layers of mortar were inserted in a formwork, and each layer was poked eight times with a poking stick for molding. Subsequently, the weights of the test pieces after molding were measured one by one to confirm that the weight was 370 g or more as the standard value (excluding the weight of the formwork).

The test pieces after molding were allowed to stand for 24 hours in a laboratory at 20±2°C, and test pieces with no abnormalities, such as hardening defects, were then directly demolded. Some were allowed to stand for another 24 hours before demolding. The setting state was visually observed on a daily basis from the material age of 1 day until hardening occurred to determine the time at which hardening occurred. At the material age of 7 days, the test pieces were demolded after being confirmed to have no hardening defects. The demolded test pieces were placed in a water tank at 20±1°C, and underwater curing was performed until the predetermined material age.

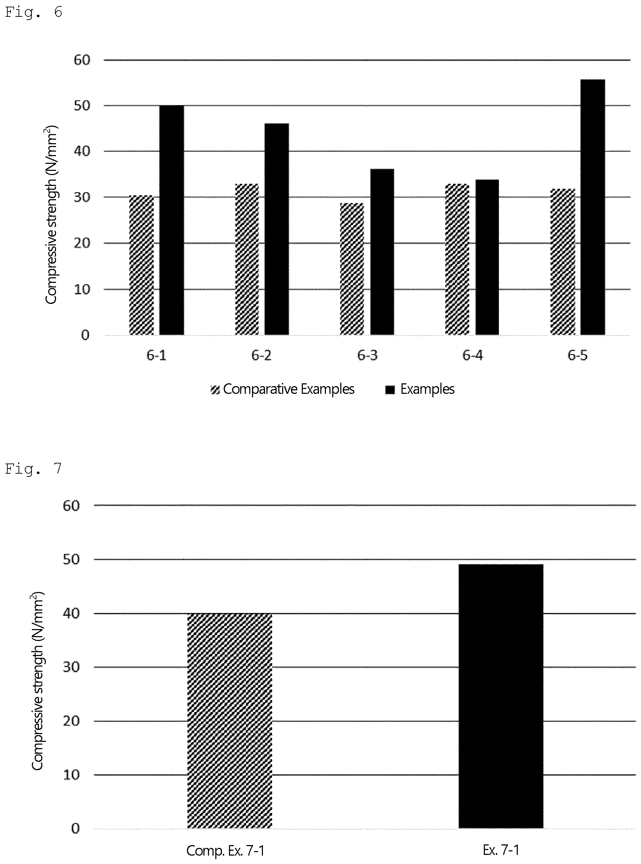

At the material age of 28 days, the end surfaces of the test pieces were polished, the sizes and weights were measured, and a test for compressive strength was then conducted in accordance with JIS A 1108. Fig. 6 shows the results.

The results revealed that the addition of the flaky carbon dispersion liquid improved the compressive strength as compared with the base concrete, showing a 74.1% increase in strength at maximum at the material age of 28 days.

### Comparative Example 7-1

0.151 kg of MasterPolyheed 15S (produced by BASF Japan Ltd.) and 7.74 kg of water were mixed to obtain kneading water.

In accordance with the kneading method described in the "Method of making test sample of concrete in laboratory" in JIS A 1138, and using a mixer, 14.3 kg of ordinary Portland cement (produced by Sumitomo Osaka Cement Co., Ltd.), 27.4 kg of river sand (from the Ibi river) as a fine aggregate, 11.8 kg of crushed sand (from Ibaraki), and 46.9 kg of crushed stone (from Nishijima) as a coarse aggregate were kneaded at low speed for 10 seconds. Next, kneading was performed at low speed for 90 seconds while adding 7.891 kg of the obtained kneading water, and the resulting product was discharged into a kneading container and kneaded again with a shovel for concrete until uniform, thus producing concrete having the composition shown in Table 8.

### Example 7-1

250 g of natural graphite (produced by Ito Graphite Co., Ltd.), 1141 g of MasterPolyheed 15S (produced by BASF Japan Ltd.), and 3609 g of water were mixed and stirred to obtain a liquid mixture. The liquid mixture was subjected to shear treatment twice at 1700 rpm using a ceramic grinder with a radius of 300 mm. The shortest distance in the ceramic grinder was about 10 um.

The resulting dispersion liquid was applied to a silicon wafer and observed with a scanning electron microscope (SEM), which revealed that flaky carbon was obtained. The flaky carbon had a flake size of 1 to 20 µm.

0.784 kg of the obtained flaky carbon dispersion liquid and 7.14 kg of water were added to obtain kneading water.

In accordance with the kneading method described in the "Method of making test sample of concrete in laboratory" in JIS A 1138, and using a mixer, 14.3 kg of ordinary Portland cement (produced by Sumitomo Osaka Cement Co., Ltd.), 27.4 kg of river sand (from the Ibi river) as a fine aggregate, 11.8 kg of crushed sand (from Ibaraki), and 46.9 kg of crushed stone (from Nishijima) as a coarse aggregate were kneaded at low speed for 10 seconds. Next, kneading was performed at low speed for 90 seconds while adding 7.924 kg of the obtained kneading water, and the resulting product was discharged into a kneading container and kneaded again with a shovel for concrete until uniform, thus producing concrete having the composition shown in Table 8.

### Test Example 14: Fresh Properties of Concrete

Concrete was produced according to Comparative Example 7-1 and Example 7-1, and fresh properties were measured in accordance with JIS A 1101 for slump and JIS A 1128 for air content. Table 8 shows the results.

**Table 8**

| | | Comparative Example | Example |
|---|---|---|---|
| | | 7-1 | 7-2 |
| Cement (kg) | | 14.3 | 14.3 |
| Fine aggregate 1 (from the Ibi river) (kg) | | 27.4 | 27.4 |
| Fine aggregate 2 (from Ibaraki) (kg) | | 11.8 | 11.8 |
| Coarse aggregate (from Nishijima) (kg) | | 46.9 | 46.9 |

| Dispersion liquid | | | |
|---|---|---|---|
| | Flaky carbon (kg) | - | 0.033 |
| | Chemical admixture (kg) | - | 0.151 |
| | Water (kg) | - | 0.60 |
| | Total (kg) | - | 0.784 |
| Chemical admixture (kg) | | 0.151 | |
| Water (kg) | | 7.74 | 7.14 |
| Concrete temperature (°C) | | 19.3 | 18.7 |
| Slump (cm) | | 9.5 | 13.0 |
| Air content (%) | | 3.8 | 3.4 |

### Test Example 15: Test for Compressive Strength

In accordance with the description of "ready-mixed concrete" in JIS A 4308, when the slump of concrete was within the range of 12.0±2.5 cm and the air content was within the range of 4.5±1.5%, three test pieces with a diameter of 100 mm × 200 mm were produced for each mix proportion in accordance with the "Method of making and curing concrete specimens" in JIS A 1132.

In the production of the test pieces, two separate layers of concrete were inserted in a formwork, each layer was poked once per 1000 mm² with a poking stick, and the side surface of the formwork was lightly hit with a wooden mallet for molding.

The test pieces after molding were allowed to stand for 24 hours in a laboratory at 20±2°C, and test pieces with no abnormalities, such as hardening defects, were then directly demolded. Some were allowed to stand for another 24 hours before demolding. The setting state was visually observed on a daily basis from the material age of 1 day until hardening occurred to determine the time at which hardening occurred. At the material age of 7 days, the test pieces were demolded after being confirmed to have no hardening defects. The demolded test pieces were placed in a water tank at 20±1°C and, and underwater curing was performed until the predetermined material age.

At the material age of 28 days, the end surfaces of the test pieces were polished, the sizes and weights were measured, and a test for compressive strength was then conducted in accordance with JIS A 1108. Fig. 7 shows the results.

The results revealed that the addition of the flaky carbon dispersion liquid improved the compressive strength as compared with the base concrete, showing a 23.1% increase in strength at maximum at the material age of 28 days.

### Test Example 16: Flexural Strength Test

In accordance with the description of "ready-mixed concrete" in JIS A 4308, when the slump of concrete was within the range of 120±2.5 cm and the air content was within the range of 4.5±1.5%, three test pieces of 100 mm × 100 mm × 400 mm were produced for each mix proportion in accordance with the "Method of making and curing concrete specimens" in JIS A 1132.

In the production of the test pieces, two separate layers of concrete were inserted in a formwork, each layer was poked once per 1000 mm² with a poking stick, spading was performed along the side surfaces and end surfaces of the formwork using a metal spatula, and the side surface of the formwork was lightly hit with a wooden mallet for molding.

The test pieces after molding were allowed to stand for 24 hours in a laboratory at 20±2°C, and test pieces with no abnormalities, such as hardening defects, were then directly demolded. Some were allowed to stand for another 24 hours before demolding. The setting state was visually observed on a daily basis from the material age of 1 day until hardening occurred to determine the time at which hardening occurred. At the material age of 7 days, the test pieces were demolded after being confirmed to have no hardening defects. The demolded test pieces were placed in a water tank at 20±1°C, and underwater curing was performed until the predetermined material age.

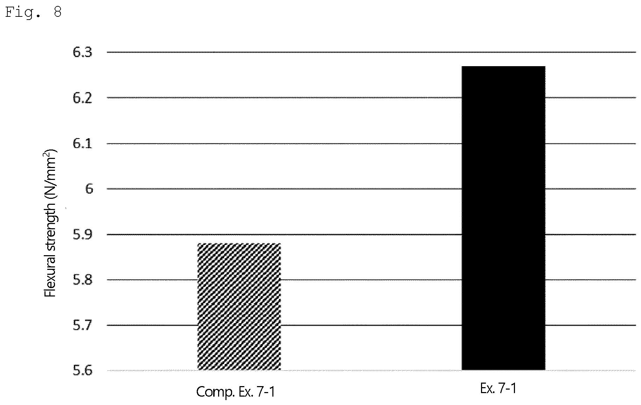

At the material age of 28 days, the end surfaces of the test pieces were polished, the sizes and weights were measured, and a test for flexural strength was then conducted in accordance with JIS A 1106. Fig. 8 shows the results.

The results revealed that the addition of the flaky carbon dispersion liquid improved the flexural strength as compared with the base concrete, showing a 6.63% increase in strength at maximum at the material age of 28 days.

## Claims

1. An additive for a hydraulic composition, comprising flaky carbon and an organic compound containing a hydrophilic group and a hydrophobic group with a high affinity for carbon.

2. The additive for a hydraulic composition according to claim 1, further comprising water.

3. The additive for a hydraulic composition according to claim 1 or 2, wherein the hydrophilic group comprises at least one member selected from the group consisting of groups represented by formulas (1) to (6): 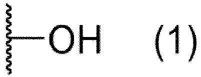 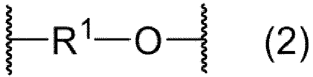 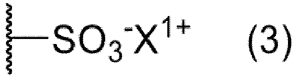 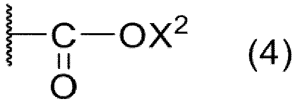 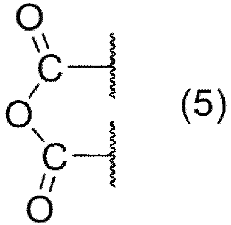 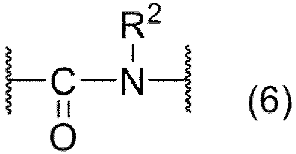 wherein -OH in formula (1) represents a hydroxyl group; the oxygen atom in formula (2) represents an ether bond; formula (5) represents an acid anhydride group; R¹ represents a divalent organic group; R² represents a hydrogen atom or an alkyl group; X¹ represents a hydrogen atom, an alkali metal, NH₄, or organic ammonium; and X² represents a hydrogen atom, an alkali metal, NH₄, organic ammonium, or an alkyl group.

4. The additive for a hydraulic composition according to any one of claims 1 to 3, wherein the hydrophilic group comprises at least one member selected from the group consisting of an alcoholic hydroxyl group, -SO₃Na, -COONa, -COOCH₃, and a polyoxyethylene group.

5. The additive for a hydraulic composition according to any one of claims 1 to 4, wherein the hydrophobic group comprises at least one member selected from the group consisting of an alkyl group, an alkenyl group, a cycloalkyl group, an aryl group, and a polyoxyalkylene group having 3 or more carbon atoms.

6. The additive for a hydraulic composition according to any one of claims 1 to 5, wherein the hydrophobic group comprises an aryl group having at least one oxygen atom attached thereto and/or an aryl group having two or more aromatic rings.

7. The additive for a hydraulic composition according to any one of claims 1 to 6, wherein the organic compound containing a hydrophilic group and a hydrophobic group with a high affinity for carbon is at least one chemical admixture for concrete selected from the group consisting of air-entraining admixtures, water-reducing admixtures, hardening accelerators, air-entraining and water-reducing admixtures, high-range water-reducing admixtures, air-entraining and high-range water-reducing admixtures, and superplasticizers.

8. The additive for a hydraulic composition according to any one of claims 1 to 7, wherein the flaky carbon has a carbon content of 95.0 mass% or more.

9. The additive for a hydraulic composition according to any one of claims 1 to 8, wherein the flaky carbon has a size of 0.1 to 30.0 µm.

10. The additive for a hydraulic composition according to any one of claims 1 to 9, wherein the flaky carbon has a thickness of 0.335 to 100 nm.

11. The additive for a hydraulic composition according to any one of claims 1 to 10, wherein the additive for a hydraulic composition comprises the organic compound containing a hydrophilic group and a hydrophobic group with a high affinity for carbon in an amount of 1 to 1000 parts by mass per 100 parts by mass of the flaky carbon.

12. A method for producing the additive for a hydraulic composition of any one of claims 1 to 11, comprising subjecting at least one carbonaceous material dispersion that contains a carbonaceous material having a layered structure, a water-soluble compound containing a hydrophobic group with a high affinity for carbon and a hydrophilic group, and a solvent to pressure treatment at 30 MPa or more,
wherein at least one treatment selected from the group consisting of the following (i) to (iii) is performed by the pressure treatment:
(i) two or more carbonaceous material dispersions that are the at least one carbonaceous material dispersion are collided with each other;
(ii) the carbonaceous material dispersion is collided with a metal or a ceramic material; and
(iii) the carbonaceous material dispersion is passed through a space with a cross-sectional area of 1 cm² or less,
the solvent comprises water, and
the content of the water is 70 mass% or more of the solvent.

13. A method for producing the additive for a hydraulic composition of any one of claims 1 to 11, comprising:
placing a composition that contains a carbonaceous material having a layered structure, a water-soluble compound containing a hydrophobic group with a high affinity for carbon and a hydrophilic group, and a solvent between a rotary plate configured to rotate and a plate disposed substantially parallel to the rotary plate; and
applying shear to the carbonaceous material in the composition while adjusting the shortest distance between the rotary plate and the plate to 200 µm or less,
wherein the solvent comprises water, and
the content of the water is 70 mass% or more of the solvent.

14. The production method according to claim 12 or 13, wherein part or all of the solvent is removed after the pressure treatment or the shear treatment.

15. A hydraulic composition comprising the additive for a hydraulic composition of any one of claims 1 to 11 and a hydraulic component.

16. The hydraulic composition according to claim 15, wherein the content of the additive for a hydraulic composition is 0.01 to 1 part by mass per 100 parts by mass of the hydraulic component.

17. The hydraulic composition according to claim 15 or 16, which is a cement hydration product.

18. A method for producing the hydraulic composition of any one of claims 15 to 17, comprising mixing a hydraulic powder material and the additive for a hydraulic composition.

19. The production method according to claim 18, wherein in the mixing step, a chemical admixture for concrete is further mixed.
